(19) Europäisches Patentamt
European Patent Office
Office européen des brevets

(11) EP 3 409 644 A1

(12) EUROPEAN PATENT APPLICATION
published in accordance with Art. 153(4) EPC

(43) Date of publication:
05.12.2018 Bulletin 2018/49

(51) Int Cl.:
*C01B 32/205* (2017.01)

(21) Application number: 17744435.3

(86) International application number:
PCT/JP2017/003054

(22) Date of filing: 27.01.2017

(87) International publication number:
WO 2017/131205 (03.08.2017 Gazette 2017/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.01.2016 JP 2016015082

(71) Applicant: Kaneka Corporation
Osaka-shi, Osaka 530-8288 (JP)

(72) Inventors:
• TACHIBANA, Masamitsu
Settsu-shi
Osaka 566-0072 (JP)
• TATAMI, Atsushi
Settsu-shi
Osaka 566-0072 (JP)
• MURAKAMI, Mutsuaki
Settsu-shi
Osaka 566-0072 (JP)

(74) Representative: Hoffmann Eitle
Patent- und Rechtsanwälte PartmbB
Arabellastraße 30
81925 München (DE)

(54) GRAPHITE FILM AND GRAPHITE TAPE

(57) A graphite film having an area of $1 \times 1$ cm$^2$ or more, a thickness of 10 nm to 10 μm, an electrical conductivity in a film surface direction of 400 S/cm or more, and a ratio of an arithmetic average roughness Ra of a surface to the thickness of 1.0 to 600 or 0.3 or less.

[Fig. 1]

EP 3 409 644 A1

**Description**

TECHNICAL FIELD

The present invention relates to a graphite product such as a graphite film and a graphite tape, and particularly relates to a high quality graphite product having an electrical conductivity of 400 S/cm or more.

BACKGROUND ART

High quality graphite films are suitable for use as a light emitter of a light emitting device, a filament, a high heat resistant wire with high current capacity, an electric resistance type heating element or the like by making use of their extremely high heat resistance, electrical conductivity, current density resistance, and the like. In these applications, the graphite film reaches a very high temperature such as 900°C or higher in many cases, and when a support member is in contact with the most part of the graphite film, the support member cannot withstand heat. In such a case, the support member is protected from heat by fixing the graphite film to the support member with only a part such as the end part or outer circumference part of the graphite film, and using the graphite film while floating in space. The graphite film itself is required to exhibit high durability even when it is only partially supported by the support member and the rest of the graphite film floats in space. The durability when a high quality graphite film floats in space is particularly required in a case where the graphite film is used as a protective film, a reflecting member, a support substrate, an absorbing member, a transmitting member, a diffractive member, a sensor, a thermal diffusion member, a subject, a workpiece or the like in an apparatus, an analyzing method or a processing method in which a strong infrared ray, an ultraviolet ray, an X ray, a laser beam, an ion beam, a proton beam, a negative hydrogen ion beam, a neutron beam, an electron beam or the like is radiated. Furthermore, improving the durability of the graphite film against repetition of heating and heating/cooling (thermal cycle) is strongly required.

Also, when fine drilling or cutting processing using an electron beam, a laser beam or the like is performed on the graphite film supported by the support member, the graphite film is damaged as a result of partial deformation, turnover, vaporization, decomposition or the like of the support member, or impurities are attached. These may be undesirable in terms of the quality of the graphite film. For this reason, there may be cases while a part of the graphite film is supported and the remaining part thereof floats in space, processing may be applied to the part floating in space, and in such cases, excellent processing durability is also required. Particularly, fine drilling and cutting processing using an electron beam, a laser beam or the like is a processing method in which only a part is heated to a high temperature, and durability against such a method is required.

As described above, the graphite film in a state in which a part thereof floats in space is required to be excellent in heat resistance, durability against repeated heating/cooling (thermal cycle), durability when the graphite film is used while only a part thereof is heated to a high temperature and the other part thereof is at a relatively low temperature (durability against partial heating or repeated partial heating and cooling (partial thermal cycle)), durability against a processing method of heating only a part of the graphite film to a high temperature, and the like. In particular, realizing such durability, as well as thinness, uniformity, large area and high electrical conductivity of the film at a high level in a well-balanced manner is strongly required.

Incidentally, the basic structure of a graphite crystal is a layered structure in which basal planes formed by carbon atoms bonded in a hexagonal network are regularly stacked (the stacked direction is referred to as the c axis, and the direction in which the basal planes formed by carbon atoms bonded in a hexagonal network spread is referred to as the a-b plane direction). Carbon atoms in the base planes are strongly bonded by covalent bonds, and the interatomic distance is 1.421 Å. On the other hand, the stacked layers are bonded by weak van der Waals force at each other, and the distance between each layer is 3.354 Å. Ideal graphite crystals are classified into hexagonal system or rhombohedral system depending on how the layers are stacked, and the ordinary structure is hexagonal system. An electrical conductivity in graphite is high in the a-b plane direction because of such anisotropy, and the electrical conductivity in this direction serves as a good index of determining the quality of graphite, such as the quality of the layer structure formed by the carbon atoms bonded in a hexagonal network. A high electrical conductivity is often needed especially when a graphite film is used as an electric wire, a light emitter, a heating element, a sensor or the like. Also, a high electrical conductivity means that the crystallinity of graphite is high, thus also means that the graphite has high thermal conductivity at the same time. Therefore, high quality graphite with high electrical conductivity is also excellent as a heat conductive material.

Examples of the electrical conductivity of conventionally known high quality graphite in the a-b plane direction include 25000 S/cm of naturally occurring graphite that is regarded as a single crystal, or graphite that is obtained from carbon dissolved in molten metal called kish graphite (Non-Patent Documents 1 and 2). Also, a method of directly heat-treating, carbonizing and graphitizing a special polymer such as polyimide, polyoxadiazole or polyparaphenylenevinylene has been developed (Patent Documents 1 and 2), and it is possible to form a graphite film having a high electrical conductivity in the a-b plane direction of 20000 S/cm or more. Further, it is known that a graphite film that is extremely thin and uniform in thickness and has extremely high electrical conductivity in the a-b plane direction can be produced by firing an extremely thin polyimide film prepared by a vapor deposition polymerization method without containing impurities such as a solvent and a curing agent (Patent Document 3).

PRIOR ART DOCUMENTS

PATENT DOCUMENTS

Patent Document 1: JP-A-2004-299919
Patent Document 2: JP-A-2005-53719
Patent Document 3: JP-A-2013-212938

NON-PATENT DOCUMENTS

Non-Patent Document 1: L. Spain, A. R. Ubbelohde, and D. A. Young "Electronic properties of oriented graphite" PHILOSOPHICAL TRANSACTIONS OF THE ROY ALSOCIETY
Non-Patent Document 2: T. C. Chieu, M. S. Dresselhaus and M. Endo, Phys. Rev. B26, 5867 (1982)

SUMMARY OF THE INVENTION

PROBLEMS TO BE SOLVED BY THE INVENTION

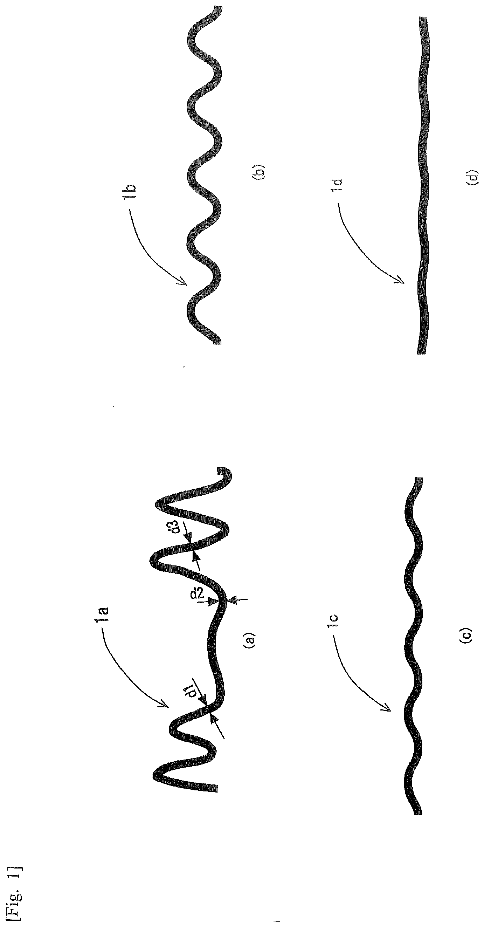

However, while a graphite film 1a as shown in Fig. 1(a) obtained by the methods described in Patent Documents 1 to 3 and Non-Patent Documents 1 and 2 is excellent in uniformity of a net thickness (d1, d2, d3) excluding wrinkles (surface irregularities) and waviness, there are many nonuniform wrinkles over the entire surface of the film, and it has been also difficult to control the size of the irregularities of the wrinkles. In addition, such conventional graphite films admit of improvement in terms of durability against high temperature heating, high temperature thermal cycle, partial high temperature heating, and partial high temperature thermal cycle. It has been found that, in particular, the thinner graphite film is weaker in the physical strength, so that break, puncture and crack are likely to occurr. Further, when the graphite film is heated to a high temperature, thickness reduction due to sublimation causes further decrease in physical strength, and breakage and the like are more likely to occurr.

The present invention has been made in view of the above circumstances, and an object thereof is to provide a graphite film in which heat resistance, particularly, durability against thermal cycle, heat resistance at the time of partial heating, and durability against partial thermal cycle are enhanced when used in a state in which a part of the graphite film floats in space. Another object of the present invention is to enhance durability when partial heating processing is performed in a state in which a part of the graphite film floats in space.

SOLUTIONS TO THE PROBLEMS

As a result of extensive study to solve the above problems, the present inventors have found that it is important to control heights of irregularities in wrinkles with respect to thickness. That is, even in cases of a graphite film as shown in Fig. 1(c) in which irregularities are reduced to enhance the uniformity of wrinkles as well as a graphite film as shown in Fig. 1(a) having nonuniform wrinkles with partially large irregularities, durability is not enhanced. On the other hand, it has been found that the wrinkles should be controlled to slightly larger wrinkles (Fig. 1(b)) corresponding to the middle of the winkles in Figs. 1(a) and 1(c) or to wrinkles smaller than the winkles in Fig. 1(c) (Fig. 1(d)), and the size of these wrinkles should be controlled within a certain range with respect to the thickness of the graphite film. When the graphite film is heated and cooled while floating in space, strain concentrates on the high curvature part of the wrinkle, and tends to be the starting point of breakage. When the wrinkles are markedly suppressed as in Fig. 1(d), the concentration of strain and the starting point of breakage can be reduced, so that durability is improved. In a case where the wrinkles are made large to a certain extent as in Fig. 1(b), even when strain concentrates on the high curvature part of the wrinkle, the wrinkles themselves can be deformed to release the strain, and the durability is improved. In a case where the wrinkles are too large as in Fig. 1(a) or the wrinkles are left halfway as in Fig. 1(c), it is considered that the functions to prevent strain concentration become insufficient and the durability deteriorates.

Conventionally, there has not been a known method for controlling a wrinkle size of a graphite film having a thickness of 10 $\mu$m or less within an appropriate range as shown in Fig. 1(b) or Fig. 1(d), and in particular, there has not been a known method for controlling wrinkles of a graphite film having a large area and having high electrical conductivity in the a-b plane direction (that is, the film surface direction). In order to improve the durability by appropriate wrinkles, it has been necessary to develop a control method of a wrinkle in the first place. In particular, there has not been a developed method for obtaining a graphite film having improved heat resistance and durability by uniformly forming wrinkles with certain ratio to the film thickness in a wide thickness range of 10 $\mu$m or less over the entire large area of 1 cm $\times$ 1 cm or more with use of a polymer raw material such as polyimide that is easily available on the market, and also having a high electrical conductivity of 400 S/cm or more. Accordingly, the development of such graphite film itself has been a big challenge. Then, the present inventors have found that a spacer having an appropriate size is suitably set on both surfaces of a polymer film, a carbonized film or a graphite film, and the polymer film, the carbonized film or the graphite film is treated at a carbonization temperature, a graphitization temperature or a re-graphitization temperature while being sandwiched between smooth press plates and pressed with appropriate pressure from both sides, so that suitable wrinkles can be formed, and consequently found that the heat resistance and durability of the graphite film can be improved as described above, and completed the present invention.

The present inventions enables to solve the problems are as follows.

(1) A graphite film having an area of 1 $\times$ 1 cm$^2$ or more, a thickness of 10 nm to 10 $\mu$m, an electrical conductivity in a film surface direction of 400 S/cm or more, and a ratio of an arithmetic average roughness Ra of a surface to the thickness of 1.0 to 600 or 0.3 or less.

(2) The graphite film according to (1), wherein a value at each position obtained by measurements of an arithmetic average roughness Ra at a plurality of positions is within $\pm$ 25% of an average value of Ra obtained from measurement results at all the plurality of positions.

(3) The graphite film according to (1) or (2), having a density of 1.5 g/cm$^3$ or more.

(4) The graphite film according to any one of (1) to (3), wherein a layer structure having layers laminated in parallel to a film surface and having no void is observed in an area of 70% or more of a cross-sectional area of the graphite film in a cross-sectional SEM image in a direction perpendicular to the film surface, the cross-sectional SEM image having both front and back surfaces of the film within a field of view.

(5) A process for producing the graphite film as defined in any one of (1) to (4), comprising:

a step of carbonizing and graphitizing a polymer film to obtain a graphite film; and
a re-graphitization step of treating the obtained graphite film again at a graphitization temperature, as necessary, wherein,
during at least one treatment of the carbonization, graphitization and re-graphitization, a spacer having a thickness of 0.4 or less or 0.75 to 350 when a thickness of a polymer film, a carbonized film or a graphite film is defined as 1 is disposed between a surface of the polymer film, the carbonized film or the graphite film to be treated and a press plate at both surfaces, and
the polymer film, the carbonized film, or the graphite film is treated at a carbonization temperature, a graphitization temperature or a re-graphitization temperature while the polymer film, the carbonized film or the graphite film is pressed from both sides at a pressure of 0.3 gf/cm$^2$ or more and 2500 gf/cm$^2$ or less using the press plates.

(6) A graphite tape having a parallel portion with a width of 40 mm or less and a length of not less than 5 times the width, wherein a material of the graphite tape is same as the material of the graphite film as defined in any one of (1) to (4).

(7) A process for producing a graphite tape, comprising cutting the graphite film as defined in any one of (1) to (4) with a laser beam to cut out a parallel portion with a width of 40 mm or less and a length of not less than 5 times the width.

(8) A method for using the graphite film as defined in any one of (1) to (4) or the graphite tape as defined in (6), the method comprising disposing the graphite film or the graphite tape in a thermal environment where a maximum temperature partially reaches 900°C or higher.

(9) The use method according to (8), wherein when a part of the graphite film or the graphite tape reaches a maximum temperature of 900°C or higher, a difference in temperature with a portion showing a minimum temperature of the graphite film or the graphite tape is 300°C or higher.

(10) The use method according to (8) or (9), wherein a plurality of the graphite tapes are arranged in parallel.

(11) The use method according to any one of (8) to (10), wherein a part of the graphite film or the graphite tape is fixed to a support member and a rest of the graphite film or the graphite tape floats in space, and a portion floating in space reaches a maximum temperature.

(12) The use method according to any one of (8) to (11), wherein an atmosphere at a time of reaching the maximum temperature is an inert gas having a pressure of 0.1 MPa or more or a vacuum having a pressure of 1000 Pa or less.

(13) The use method according to anyone of (8) to (12), wherein the graphite film or the graphite tape is heated to the maximum temperature by any one of energization, infrared irradiation, laser beam irradiation, and ion beam irradiation.

EFFECTS OF THE INVENTION

According to the present invention, wrinkles (irregularities) of a graphite film are appropriately controlled with respect to the thickness, so that heat resistance, thermal cycle durability, partial heat resistance and partial thermal cycle durability can be enhanced when the graphite film (or a graphite tape that is a narrower body thereof) is used solely in a floating state in space. It is also possible to enhance durability when a graphite film is processed by a partial heating processing method in a state in which a part of the graphite film floats in space.

BRIEF DESCRIPTION OF THE DRAWINGS

Fig. 1(a) is a schematic cross-sectional view for explaining a conventional graphite film, Fig. 1(c) is a schematic cross-sectional view for explaining a graphite film outside the present invention, and Figs. 1(b) and 1(d) are schematic cross-sectional views for explaining a graphite film according to the present invention.
Fig. 2 is an SEM photograph of a surface (upper surface) of the graphite film of the present invention.
Fig. 3 is an SEM photograph of a cross section of the graphite film of the present invention.
Fig. 4 is a cross-sectional TEM photograph of the graphite film of the present invention.
Fig. 5 is an enlarged cross-sectional SEM photograph of the graphite film of the present invention.
Fig. 6 is a schematic cross-sectional view for explaining an example of a pressing method in the present invention.
Fig. 7 is a schematic cross-sectional view for explaining another example of the pressing method in the present invention.
Fig. 8 is a schematic cross-sectional view for explaining still another example of the pressing method in the present invention.
Fig. 9 is a schematic plan view showing measurement positions of a polyimide film in the present invention.
Fig. 10 is a schematic plan view for explaining measurement positions of the graphite film of the present invention.
Fig. 11 is a schematic plan view for explaining sampling positions of the graphite film of the present invention.
Fig. 12 is a conceptual diagram for explaining a thermal cycle durability test method of the graphite film of the present invention.
Fig. 13 is another conceptual diagram for explaining the thermal cycle durability test method of the graphite film of the present invention.
Fig. 14 is still another conceptual diagram for explaining the thermal cycle durability test method of the graphite film of the present invention.
Fig. 15 is a conceptual diagram for explaining a laser cutting test method of the graphite film of the present invention.

MODE FOR CARRYING OUT THE INVENTION

(1) Graphite film

(1. 1) Basic characteristics (area, thickness, electrical conductivity)

The present invention relates to an improved technique of a graphite film having a large area, a small thickness, and high quality (high electrical conductivity). The present invention is provided because such graphite films are expected to be used in various applications for their excellent quality, and improvement in durability against breakage and heat resistance and the like are required due to their large area and small thickness.
The graphite film of the present invention has an area of $1 \times 1$ cm$^2$ or more. The area is preferably $1.5 \times 1.5$ cm$^2$ or more, more preferably $2 \times 2$ cm$^2$ or more, further preferably $3 \times 3$ cm$^2$ or more, and still more preferably $4 \times 4$ cm$^2$ or more or $5 \times 5$ cm$^2$ or more. Further, the area is most preferably $7 \times 7$ cm$^2$ or more, $10 \times 10$ cm$^2$ or more, $10 \times 15$ cm$^2$ or more, $10 \times 20$ cm$^2$ or more, $15 \times 15$ cm$^2$ or more, or $20 \times 20$ cm$^2$ or more. The upper limit of the area is not particularly limited, and may be, for example, $50 \times 50$ cm$^2$. It is a necessary or advantageous requirement for the graphite film to have such a large area when the graphite film is used for each of the applications described above and below.
The graphite film of the present invention has a thickness of 10 $\mu$m or less, preferably 8 $\mu$m or less, further preferably 5 $\mu$m or less, and particularly preferably 3 $\mu$m or less, 2 $\mu$m or less, 1.8 $\mu$m or less, 1.5 $\mu$m or less, 1.0 $\mu$m

or less, or 0.5 μm or less. When the graphite film is thinner, it can be used for applications requiring small, thin, lightweight, and the like. Further, in a method for producing the graphite of the present invention described later including firing a polymer film, when the other conditions are the same, a thinner graphite film obtained by thinning the polymer film has higher electrical conductivity in the a-b plane direction, that is, the film surface direction, and this contributes to the improvement in electrical conductivity and quality of the graphite film.

The thickness of the graphite film is 10 nm or more, preferably 20 nm or more, more preferably 30 nm or more, and further preferably 50 nm or more, 80 nm or more, or 100 nm or more. The thickness is still more preferably 200 nm or more or 300 nm or more. When the graphite film is thicker, it is hardly broken, and unexpected situations such as local puncture due to sublimation of graphite during firing are less likely to occur, and production, handling and processing are also easily performed. In addition, a ratio of thickness error of film thickness is small, which is advantageous in terms of product quality assurance.

The thickness of the graphite film is preferably between 20 nm and 8 μm, more preferably between 30 nm and 5 μm, and still more preferably between 50 nm and 3 μm. Further, the thickness is most preferably between 100 nm and 1.7 μm, between 200 nm and 1.5 μm, or between 300 nm and 1.0 μm.

The thickness of the graphite film can be measured using a known apparatus, and can be measured by, for example, a contact type measurement method such as caliper or stylus type, an optical measurement method such as laser displacement meter or spectroscopic ellipsometry, a cross-sectional observation method using SEM (Scanning Electron Microscope) or TEM (Transmission Electron Microscope), or the like. In this specification, the thickness of the graphite film is measured using a contact type thickness meter as described later.

The graphite film of the present invention has an electrical conductivity of 400 S/cm or more. The electrical conductivity is more preferably 500 S/cm or more, further preferably 600 S/cm or more, still preferably 900 S/cm, still more preferably 1200 S/cm or more or 1500 S/cm or more, and even more preferably 2000 S/cm or more, 3000 S/cm or more, 4000 S/cm or more, or 5000 S/cm or more. Further, the electrical conductivity is most preferably 8000 S/cm or more, 10000 S/cm or more, 15000 S/cm or more, 17000 S/cm or more, or 20000 S/cm or more. The upper limit of the electrical conductivity is not particularly limited, and is, for example, 30000 S/cm or less, and particularly 27000 S/cm or less. A high electrical conductivity means that graphite is excellent in crystallinity and has few cracks and few defects, which means that the graphite film has high quality. This also means that a thermal conductivity is high at the same time. Particularly when the graphite film is used for a light emitter of a light emitting device, an electric resistance type heating element, a sensor or the like, it is advantageous to have a high electrical conductivity above a certain level. Also, even when the graphite film is used for an electric wire, a thermal diffusion member, a member for electronic circuit or the like, a graphite film with higher electrical conductivity is generally more excellent. The electrical conductivity can be calculated from the electric resistance (sheet resistance) obtained by a known procedure such as van der Pauw method or general 4-terminal method, and a dimension and thickness of the graphite film.

(1. 2) Wrinkles

The graphite film of the present invention avoids the state as shown in Fig. 1(a) or (c), and surface wrinkles are controlled within an appropriate range as shown in Fig. 1(b) or (d). Therefore, despite of being large area and thin thickness, the graphite film is excellent in heat resistance and durability.

Fig. 1(a) is a schematic cross-sectional view showing one form of a conventional graphite film, in which a wrinkle-free region, a region with fine wrinkles, and a region where large wrinkles are concentrated coexist, and nonuniformity of formed wrinkles is conspicuous. In such a graphite film, the influence of local strain due to high temperature heating or cooling is easily exhibited, for example, at the boundary between a relatively large and sharp irregular part and a relatively flat part, and therefore heating or thermal cycling may easily cause puncture, cracks or breakage. Even when wrinkles are formed relatively uniformly, the irregular parts of the wrinkles may be easily punctured, cracked or broken as well by the influence of local strain due to high temperature heating or cooling, in a case where the height of irregularities of the wrinkles is too large with respect to the thickness of the graphite film. Furthermore, even when wrinkles are made uniform, an ability to alleviate local strain due to high temperature heating or cooling by buffer effect through expansion and contraction or deformation of the wrinkles is insufficient in a case where the height of irregularities of the wrinkles is not appropriate as in Fig. 1(c). Therefore, heating or thermal cycling may easily cause puncture, cracks or breakage.

On the other hand, in the present invention, an appropriate height is left while wrinkles are made uniform as in Fig. 1(b), so that even when the influence of local strain due to high temperature heating or cooling is likely to be exhibited, for example, at the boundary between the irregular part and the flat part, this local strain can be buffered by expansion and contraction or deformation of the wrinkles, and a breakage can be prevented. Also, when irregularities of the wrinkles are markedly reduced with respect to the thickness as in Fig. 1(d), the occurrence of local strain itself can be prevented, and a breakage can be prevented.

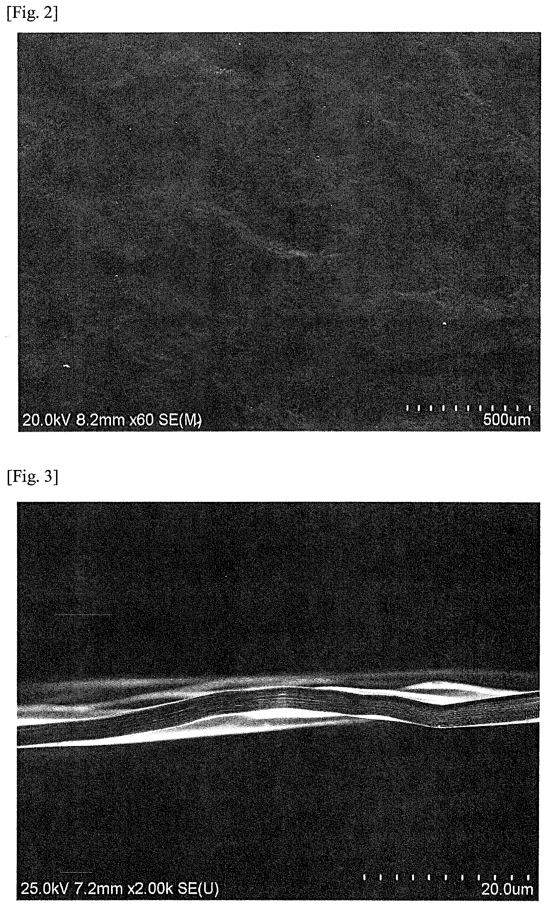

The state in which appropriate irregularities with respect to the thickness exist as in Fig. 1(b) can be specifically expressed by a ratio of the arithmetic average roughness Ra (average value, $\mu$m) of the surface of the graphite film to the thickness (average value, $\mu$m) of the graphite film. That is, in the state of Fig. 1(b), a value ($\mu$m/$\mu$m) of the average value of the Ra/the average value of the thickness is 1.0 or more and 600 or less. Furthermore, the value is preferably 1.5 or more, further preferably 2.0 or more, still preferably 2.5 or more, still more preferably 3.0 or more, more preferably 4.0 or more, and particularly further preferably 5.0 or more, 6.0 or more, 8.0 or more, or 10 or more. Also, the value is preferably 500 or less, more preferably 400 or less, further preferably 300 or less, still more preferably 200 or less, 150 or less, 100 or less, 50 or less, 30 or less, or 20 or less. Fig. 2 is an SEM photograph of the surface (upper surface) of the graphite film in the state of Fig. 1(b), and Fig. 3 is an SEM photograph of the cross section of the graphite film, showing that irregularities with appropriate height are uniformly formed.

The state in which the irregularities of the wrinkles are markedly small with respect to the thickness as in Fig. 1(d) can be also expressed by a ratio of the arithmetic average roughness Ra (average value, $\mu$m) of the surface of the graphite film to the thickness (average value, $\mu$m) of the graphite film. That is, in the state of Fig. 1(d), the value ($\mu$m/$\mu$m) of the average value of the Ra/the average value of the thickness is 0.3 or less. The value is more preferably 0.25 or less, still preferably 0.20 or less, and further preferably 0.15 or less. Also, the value is preferably 0.1 or less, and more preferably 0.05 or less. The value may be 0.001 or more.

The arithmetic average roughness (Ra) itself of the surface of the graphite film may be in an appropriate range according to the thickness of the graphite film so as to satisfy the above ranges, or may have a preferable range according to the wrinkle state of the graphite film. In the graphite film having appropriate irregularities as in Fig. 1(b), the arithmetic average roughness (Ra) of the surface is, for example, 0.5 $\mu$m or more, preferably 5 $\mu$m or more, and more preferably 10 $\mu$m or more, and may be 30 $\mu$m or more. Also, the arithmetic average roughness (Ra) is, for example, 200 $\mu$m or less, preferably 100 $\mu$m or less, and more preferably 50 $\mu$m or less.

In the graphite film having markedly small irregularities of the wrinkles as in Fig. 1(d), the arithmetic average roughness (Ra) of the surface is, for example, 0.5 $\mu$m or less, preferably 0.3 $\mu$m or less, and more preferably 0.25 $\mu$m or less. Also, the arithmetic average roughness (Ra) is, for example, 0.05 $\mu$m or more and preferably 0.1 $\mu$m or more, and may be more than 0.2 $\mu$m.

When the arithmetic average roughness Ra is measured at a plurality of positions in the graphite film, the value at each position is, for example, within $\pm$ 25%, preferably within $\pm$ 20%, and more preferably within $\pm$ 15% of the average value of Ra obtained from the measurement results at all the plurality of positions. By reducing the variation of the Ra in the film, the uniformity of irregularities of the wrinkles can be further enhanced, and the durability of the graphite film can be further improved.

The arithmetic average roughness Ra can be determined by an existing method, that is, a stylus type surface roughness meter, an optical method such as a laser microscope, or a method such as STM (Scanning Tunneling Microscope) or AFM (Atomic Force Microscope). JIS B 0601-2001, for example, shall be applied or applied mutatis mutandis as provisions regarding these.

(1. 3) Other characteristics

A density and a gap in the graphite film is not particularly limited, but the density is preferably 1.5 g/cm$^3$ or more. Further, the density is still more preferably 1.6 g/cm$^3$ or more, 1.7 g/cm$^3$ or more, 1.8 g/cm$^3$ or more, 1.9 g/cm$^3$ or more, 1.95 g/cm$^3$ or more, 2.0 g/cm$^3$ or more, 2.05 g/cm$^3$ or more, 2.1 g/cm$^3$ or more, or 2.15 g/cm$^3$ or more. Incidentally, as the density is higher, a gap part that is a starting point where breakage or puncture occurs is reduced, and heat is less likely to accumulate during heating. The upper limit of the density is, for example, 2.26 g/cm$^3$ or less and may be 2.20 g/cm$^3$ or less.

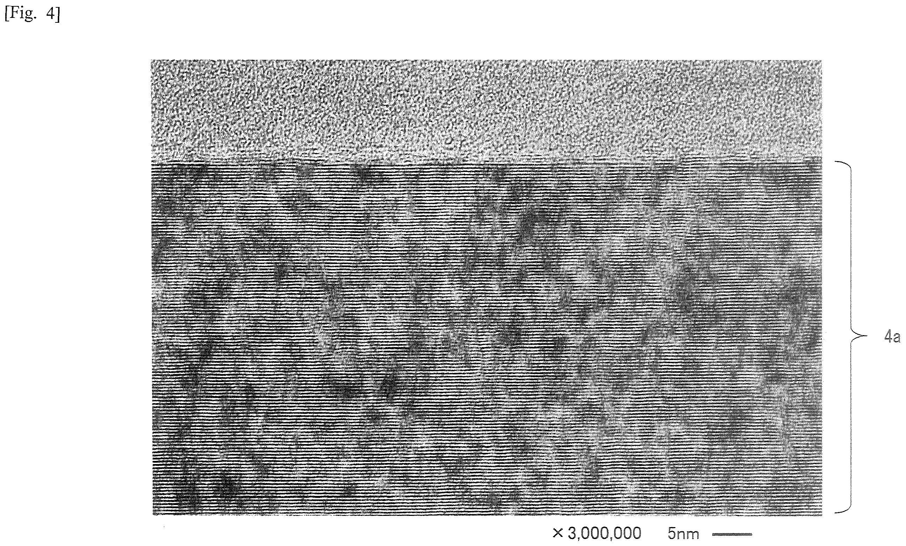

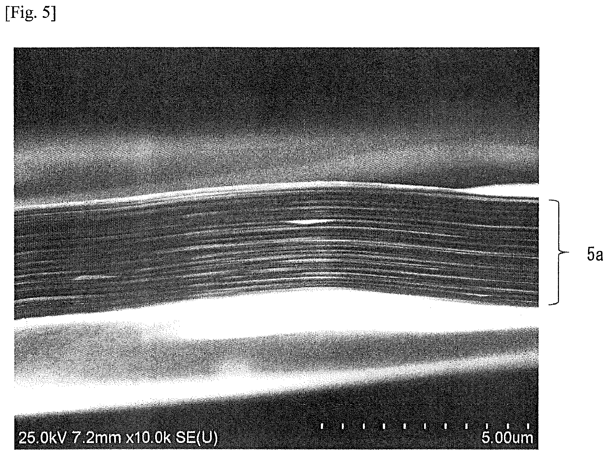

Fig. 4 is an example of a cross-sectional TEM photograph (magnification 3,000,000 times) of a graphite film 4a of the present invention, and Fig. 5 is an example of a cross-sectional SEM photograph (magnification 10,000 times) of a graphite film 5a of the present invention. As shown in the TEM cross-sectional photograph or the SEM cross-section photograph, ultra-thin graphite layers are preferably laminated without gaps in the area of 70% or more in the cross section in the direction perpendicular to the film surface of the graphite film. In this cross section, a proportion of the area of the portion where the ultra-thin graphite layers are laminated without gaps is more preferably 75% or more, still preferably 80% or more, and even more preferably 85% or more, 90% or more, or 95% or more. Most preferably, the graphite film has a laminate structure in which the ultra-thin graphite layers are laminated from one surface to the other surface of the graphite film without gaps. Depending on the thickness of the graphite film, the ultra-thin graphite layers may be 100 layers or more, and mostly 10 layers or more. A laminated structure in which flat graphenes or ultra-thin graphites are laminated without gaps is preferably observed in the TEM cross-sectional image and/or SEM cross-sectional image, and more preferably, no gap is observed.

A graphite crystal forming individual ultra-thin graphite layers may has a domain size as small as, for example, less than 100 $\mu$m (for example, 10 $\mu$m or more), particularly less than 10 $\mu$m (for example, 1 $\mu$m or more), or the like.

(1. 4) Surface treatment

Even the graphite film of the present invention having wrinkles with appropriate height (having appropriate Ra) can be subjected to various surface treatments that alter the apparent wrinkle height. For example, it is possible to deposit carbon, metal or the like on the surface, apply a paste such as carbon, apply particles such as carbon or metal, give irregularities by embossing, make a cut, put a crease, and crush wrinkles by pressing to be flattened. Particularly performing such surface treatment to a part of the graphite film may be effective. By altering the apparent wrinkle height by surface treatment, slipperiness and friction of the surface can be adjusted appropriately when the graphite film is fixed to other members such as a frame, and adhesion to other members can be improved. The graphite film whose degree of irregularity is altered by such surface treatment is also included in the present invention at the stage before the treatment as long as the surface irregularities before the treatment are within the range of the present invention.

(2) Method for producing graphite film

The graphite film can be produced by applying a press treatment with use of a spacer at an appropriate stage, based on a method for producing a graphite film from a polymer film or a carbonized film. First, the basic part of producing a graphite film from a polymer film through a carbonized film will be described in detail.

(2. 1) Polymer film

A raw material polymer used for the polymer film is not particularly limited as long as it has film formability and provides high quality graphite by firing, and an aromatic polymer is preferable. The aromatic polymer is preferably at least one selected from polyimide, polyamide, polyparaphenylenevinylene, polyquinoxaline, polyoxadiazole, polybenzimidazole, polybenzoxazole, polybenzthiazole, polyquinazolinedione, polybenzoxazinone, polyquinazolone, benzimidazobenzophenanthroline ladder polymer and derivatives thereof A film made from these polymer raw materials may be produced by a known production process. Particularly preferred examples of the raw material polymer may include aromatic polyimide, polyparaphenylenevinylene and polyoxadiazole, and aromatic polyimide is particularly preferable.

(2. 1. 1) Aromatic polyimide

(2. 1. 1. 1) Polyamic acid

As the aromatic polyimide, an aromatic polyimide prepared through a polyamic acid from an acid dianhydride (particularly aromatic acid dianhydride) and a diamine (particularly aromatic diamine) described below is particularly preferable.

Examples of the acid dianhydride include pyromellitic dianhydride (PMDA), 2,3,6,7-naphthalenetetracarboxylic dianhydride, 3,3',4,4'-biphenyltetracarboxylic dianhydride, 1,2,5,6-naphthalenetetracarboxylic dianhydride, 2,2',3,3'-biphenyltetracarboxylic dianhydride, 3,3',4,4'-benzophenonetetracarboxylic dianhydride, 2,2-bis(3,4-dicarboxyphenyl)propane dianhydride, 3,4,9,10-perylenetetracarboxylic dianhydride, bis(3,4-dicarboxyphenyl)propane dianhydride, 1,1-bis(2,3-dicarboxyphenyl)ethane dianhydride, 1,1-bis(3,4-dicarboxyphenyl)ethane dianhydride, bis(2,3-dicarboxyphenyl)methane dianhydride, bis(3,4-dicarboxyphenyl)ethane dianhydride, oxydiphthalic dianhydride, bis(3,4-dicarboxyphenyl)sulfone dianhydride, p-phenylene-bis(trimellitic acid monoester acid anhydride), ethylene bis(trimellitic acid monoester acid anhydride), bisphenol A bis(trimellitic acid monoester acid anhydride), and analogues thereof, and they can be used alone or in mixtures in any proportions. Particularly, from the viewpoint that the orientation of a polyimide film is made higher as the polymer structure is rigid and graphite excellent in crystallinity is easily obtained, and also from the viewpoint of availability, pyromellitic dianhydride (PMDA) and 3,3',4,4'-biphenyltetracarboxylic dianhydride are particularly preferable.

Examples of the diamine include 4,4'-diaminodiphenyl ether (ODA), p-phenylenediamine (PDA), 4,4'-diaminodiphenylpropane, 4,4'-diaminodiphenylmethane, benzidine, 3,3'-dichlorobenzidine, 4,4'-diaminodiphenyl sulfide, 3,3'-diaminodiphenyl sulfone, 4,4'-diaminodiphenyl sulfone, 4,4'-diaminodiphenyl ether, 3,3'-diaminodiphenyl ether, 3,4'-diaminodiphenyl ether, 1,5-diaminonaphthalene, 4,4'-diaminodiphenyldiethylsilane, 4,4'-diaminodiphenylsilane, 4,4'-diaminodiphenylethylphosphine oxide, 4,4'-diaminodiphenyl-N-methylamine, 4,4'-diaminodiphenyl-N-phenylamine, 1,4-diaminobenzene (p-phenylenediamine), 1,3-diaminobenzene, 1,2-diaminobenzene, and analogues thereof, and they can be used alone or in mixtures in any proportions. Further, from the viewpoint that the orientation of a polyimide film is made higher and graphite excellent in crystallinity is easily obtained, and from the viewpoint of availability, using 4,4'-diaminodiphenyl ether (ODA) and p-phenylenediamine (PDA) is preferable.

Any known method can be used for a polymerization method for preparing a polyamic acid from the acid dianhydride and the diamine. Examples thereof include a method in which at least one acid dianhydride and at least one diamine are dissolved in an organic solvent, and the resulting organic solvent solution of polyamic acid is stirred, under controlled temperature conditions, until the polymerization of the acid dianhydride and the diamine is completed. A particularly preferred polymerization method includes the following, taking a method of preparing a polyamic acid from an aromatic tetracarboxylic dianhydride and an aromatic diamine as an example. That is,

1) a method in which an aromatic diamine is dissolved in a polar organic solvent, and a substantially equimolar amount of an aromatic tetracarboxylic dianhydride is caused to react with the resulting solvent to polymerize;
2) a method in which an aromatic tetracarboxylic dianhydride and a less than equimolar amount of an aromatic diamine compound with respect to the aromatic tetracarboxylic dianhydride are caused to react with each other in a polar organic solvent to obtain a pre-polymer having acid anhydride groups at both terminals, and subsequently, polymerization is performed using an aromatic diamine compound such that the aromatic tetracarboxylic dianhydride and the aromatic diamine compound are substantially equimolar to each other in the entire process;
3) a method in which an aromatic tetracarboxylic dianhydride and an excess molar amount of an aromatic diamine compound with respect to the aromatic tetracarboxylic dianhydride are caused to react with each other in a polar organic solvent to obtain a pre-polymer having amino groups at both terminals, and subsequently, after adding an additional aromatic diamine compound to the pre-polymer, polymerization is performed using the aromatic tetracarboxylic dianhydride such that the aromatic tetracarboxylic dianhydride and the aromatic diamine compound are substantially equimolar to each other in the entire process;
4) a method in which an aromatic tetracarboxylic dianhydride is dissolved and/or dispersed in a polar organic solvent, and then polymerization is performed using an aromatic diamine compound so as to be substantially equimolar;
5) a method in which a mixture of substantially equimolar amounts of an aromatic tetracarboxylic dianhydride and an aromatic diamine are caused to react with each other in a polar organic solvent to perform polymerization; and so on.

The polyamic acid solution has a concentration of usually 5 to 35% by weight, and preferably 10 to 30% by weight. When the concentration is within this range, a proper molecular weight and solution viscosity can be obtained. When the concentration of the polyamic acid solution is too low, the molecular weight may not be sufficient and the strength of the resulting polyimide film may not be sufficient. Also, the viscosity is too low, so that it may be difficult to form a polyimide film. On the other hand, when the concentration of the polyamic acid solution is too high, the viscosity is very high, so that it is difficult to form a polyimide film.

It is preferred to make the dianhydride and the diamine in the polyamic acid solution substantially equimolar amount, and the molar ratio (acid dianhydride : diamine) is, for example, 1.5:1 to 1:1.5, preferably 1.2:1 to 1:1.2, and more preferably 1.1:1 to 1:1.1.

Preferred solvents for synthesizing the polyamic acid are amide solvents, that is, N,N-dimethylformamide, N,N-dimethylacetamide and N-methyl-2-pyrrolidone, and N,N-dimethylformamide and N,N-dimethylacetamide are particularly preferably used.

(2. 1. 1. 2) Polyimidization

A method for producing polyimide includes a thermal curing method in which imidization of the polyamic acid, which is a precursor, is performed by heating; and a chemical curing method in which imidization of a polyamic acid is performed using a dehydrating agent represented by an acid anhydride such as acetic anhydride, and a tertiary amine such as picoline, quinoline, isoquinoline or pyridine as an imidization accelerator. In the present invention, any of the methods may be used. The chemical curing method is preferable from the viewpoint that the resulting polyimide film is hardly damaged even when pressed during firing and that it is easy to obtain a graphite film with high quality such as high electrical conductivity. On the other hand, in the thermal curing method, imidization hardly occurs unless the polyamic acid is heated, so that the thermal curing method can be used relatively easily even when a polyimide film is formed over time. For example, the thermal curing method is easily applied to various polyimide film forming methods such as a spin coating method, and it is advantageous that the degree of freedom in the production process is high.

For example, a method for producing a polyimide film by chemical curing is as follows. First, a stoichiometric amount or more of a dehydrating agent and a catalytic amount of an imidization accelerator are added to an organic solvent solution of the polyamic acid, and the solution is casted or applied onto a support substrate such as an aluminum foil, a polymer film such as PET, a support such as a drum or an endless belt to be formed into a film, and the organic solvent solution is dried under heat to obtain a film having self-supporting properties. Subsequently, the resulting film is imidized while drying by further heating to obtain a polyimide film. The temperature during heating is preferably in the range of 150°C to 550°C.

Imidization may be performed simply by heating to obtain a polyimide film (thermal curing method), without adding an imidization accelerator as described above. The heating temperature in this case is also preferably in the range of 150°C to 550°C.

Furthermore, it is preferable to include a step of fixing or stretching the film in order to prevent contraction or enhance orientation of the polymer chain in the film surface direction during the polyimide production process. This is because use of a polyimide film having high orientation in the film surface direction tends to increase the crystallinity of graphite, and as a result, a graphite film with high electrical conductivity and high thermal conductivity can be easily obtained. The reason for this is as follows. At the time of graphitization, it is necessary to rearrange carbon atoms to the structure of the graphite crystal in the graphite precursor, but the rearrangement can be made small with polyimide originally excellent in the orientation in the film surface direction, so that the conversion into graphite proceeds smoothly by firing.

In addition, when it is desired to obtain a polyimide film directly on a substrate such as a copper foil, an aluminum foil, a quartz plate or a glassy carbon (GC) plate, a polyamic acid film may be formed on a desired substrate using a bar coater or a spin coater and then imidized by heating to obtain a polyimide film with a substrate. Even in this case, either the chemical curing method or the thermal curing method can be used.

(2. 1. 2) Thickness of polymer film

In order to obtain the graphite film in the thickness range of the present invention, the raw material polymer film has a thickness preferably in the range of 35 $\mu$m to 20 nm. This is because, generally in many cases, the thickness of the graphite film finally obtained is about 60 to 30% of the thickness of the raw material polymer film when the thickness of the raw material polymer film is 1 $\mu$m or more, and it is about 50% to 20% of the thickness of the raw material polymer film when the thickness of the raw material polymer film is 1 $\mu$m or less. Therefore, in order to finally obtain the graphite film of the present invention having a thickness of 10 nm to 10 $\mu$m, the thickness of the raw material polymer film is in the range of 20 nm or more and 35 $\mu$m or less, but is mostly 30 nm or more and 30 $\mu$m or less.

(2. 2) Carbonized film

The carbonized film can be produced by heating the polymer film in an inert gas or vacuum. Nitrogen, argon or a mixed gas of argon and nitrogen is preferably used as the inert gas. The carbonization is usually carried out at a temperature of about 800°C to 1800°C. For example, a method is preferably used in which the polymer film is heated to about 800°C to 1800°C at a heating rate of 10°C/min, and the temperature is maintained for about 10 minutes. The heating rate is not particularly limited, but is preferably 0.5°C/min or more from the viewpoint of productivity improvement, and is preferably 100°C/min or less for sufficient carbonization. Generally, the heating rate is preferably between 1 °C/min and 50°C/min. There is no particular limitation on the heating system for carbonization, but it is preferable to use a system including a resistance heating type heater such as a graphite heater or a system including infrared irradiation.

(2. 3) Graphite film

The graphite film can be produced by heat-treating the carbonized film in a graphitization furnace. In order to create a high temperature of 2200°C or higher necessary for graphitization, usually an electric current is passed through a graphite heater, and heating is performed using the Joule heat. The graphitization is carried out in an inert gas. Argon is most suitable as the inert gas, and adding a small amount of helium to argon is more preferable.

As the heating temperature is higher, the graphite film with high electrical conductivity is likely to be obtained. The polymer film with a thickness of 5 $\mu$m or less particularly tends to convert to graphite even at a relatively low temperature, so the heating temperature necessary to obtain the graphite film of the present invention is relatively low, and it is 2200°C or higher. The fact that the graphitization is possible at such a relatively low temperature is advantageous in that the graphitization furnace can be simplified and cost can be reduced by electric power saving. Of course, when it is desired to realize a high electrical conductivity, the higher temperature during the graphitization is preferable. Therefore, in the graphitization, the carbonized film is preferably heated at a temperature of 2400°C or higher, further preferably 2600°C or higher and 2700°C or higher, and most preferably 2800°C or higher, 2900°C or higher, or 3000°C or higher. The graphitization can be carried out, for example, at 3500°C or lower, particularly 3200°C or lower.

(2. 4) Press treatment

It is difficult to form appropriate wrinkles (irregularities) merely by producing the graphite film from the polymer film as described above. When the polymer film is carbonized by using an aromatic polyimide as the polymer film, the carbonized film tends to naturally contract to about 75 to 85% of the original polymer film during the carbonization in many cases. In addition, when contraction and expansion of the film during carbonization and graphitization is left to nature, a dimension in the film surface direction of the graphite film finally obtained is about 85 to 95% of the dimension of the original polymer film in many cases. Due to such natural contraction and expansion, a region where large wrinkles are biased and a region where there is not much wrinkle coexist in the graphite film, so that appropriate wrinkles are not formed.

Therefore, in the present invention, the height of the wrinkles is made uniform by press treatment using a spacer, and appropriate wrinkles are formed. Specifically, a spacer having an appropriate size is appropriately disposed (particularly dispersed) on both surfaces of the polymer film, the carbonized film or the graphite film, and the polymer film, the carbonized film or the graphite film is treated at a carbonization temperature, a graphitization temperature or a re-graphitization temperature while being sandwiched between smooth press plates and pressed with appropriate pressure from both sides, so that appropriate wrinkles can be formed. Incidentally, the carbonization is a treatment performed on the polymer film, the graphitization is a treatment performed on the carbonized film, and the re-graphitization is a treatment performed on the graphite film. In a case where the polymer film is carbonized, followed by graphitization, the press treatment may be performed on one of the carbonization and the graphitization or may be carried out on both the carbonization and the graphitization. The press treatment is performed preferably at least at the stage of the graphitization.

(2. 4. 1) Pressing with curved substrate

Each of the press plates used for sandwiching the polymer film, the carbonized film or the graphite film (hereinafter, these are collectively referred to as a film to be treated) may be a curved substrate or a planar (flat) substrate. Alternatively, the film to be treated may be sandwiched between a curved substrate and a planar substrate to be pressed.

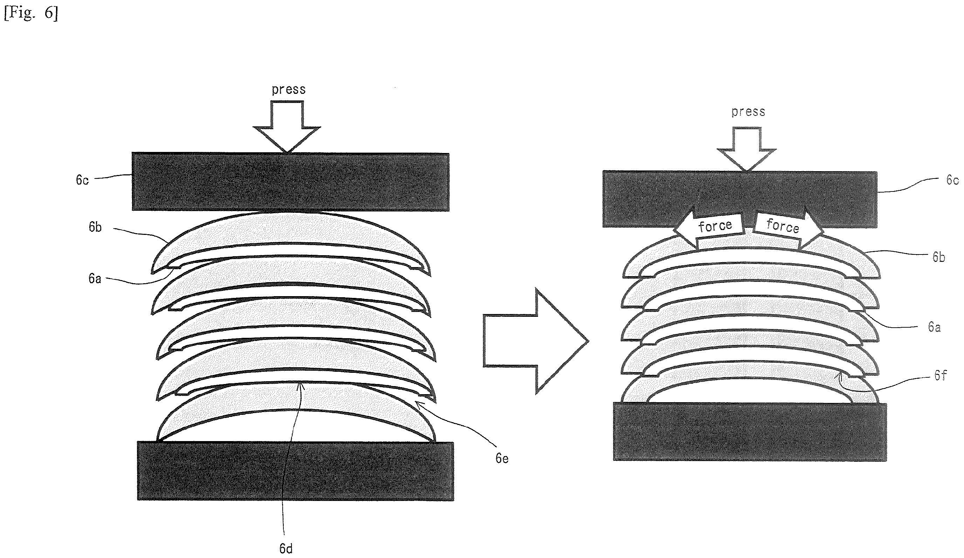

Fig. 6 is a schematic cross-sectional view showing an example of a method of sandwiching a film to be treated with curved substrates and pressing the film. In the example of Fig. 6, dome-shaped curved substrates (curved press plates) 6b that exhibit flexibility by heating are used as press plates, a film to be treated 6a is sandwiched from the upper and lower sides with the curved substrates 6b, and these are further sandwiched between second press plates 6c and pressed from the upper and lower sides until the curved substrates 6b deform to a flat shape or a shape closed to a flat shape while heated to a high temperature (this means carbonization temperature, graphitization temperature or re-graphitization temperature, the same will be applied in the explanation of press treatment hereinafter). Accordingly, for example, the film to be treated 6a is initially pushed only by one point (in the illustrated example, around the apex of the curved substrate 6b) 6d that is a contact point between the curved substrates, but as the curved substrates are deformed to a flat shape by pressing, intervals 6e and 6f between the curved substrates are narrowed and the film to be treated is gradually expanded to the periphery around the contact point 6d. By providing a spacer between the dome-shaped curved substrates 6b, a certain space is created between the dome-shaped curved substrates according to the size and existence density of the spacer, and an appropriate lubricating effect is also given, and consequently, predetermined wrinkles can be formed.

It is preferable that the curved substrate basically presses the film to be treated so as to push and stretch the film radially outward from the center of the graphite film along the film surface, but it is not necessarily isotropic. The deviation in this direction may be not only deviation within the film surface but also in a direction away from the film surface. Particularly when the film to be treated has anisotropy in the orientation, it is effective to push and stretch the film not radially from the center but in a direction intentionally deviated from the radial direction. It is also effective when it is desired to intentionally give anisotropy to characteristics such as structure and electrical conductivity of the graphite film.

The curved substrate is not required to have a dome shape as long as it has an appropriate curved surface. For example, a substrate having a curved surface bent only in one direction such as the side surface of a cylinder may be used. At least one curved substrate may be used. For example, a film to be treated may be sandwiched between a curved substrate and a planar substrate.

When the curved substrate has a dome shape, the curved substrate has an inner curvature radius of, for example, about 150 cm to 500 cm, preferably about 200 to 400 cm, and more preferably about 250 to 350 cm. Also, an outer curvature radius of the curved substrate is, for example, about 130 to 450 cm, preferably about 180 to 400 cm, and more preferably about 230 to 320 cm.

(2. 4. 2) Pressing with planar substrate

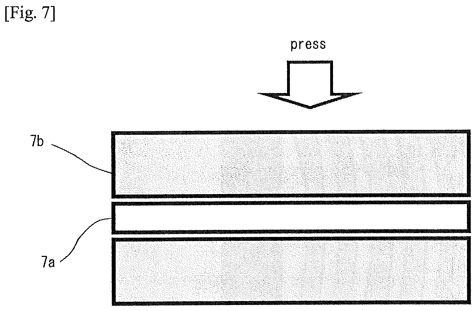

Fig. 7 is a schematic cross-sectional view showing an example of a method of sandwiching a film to be treated with planar substrates as press plates and pressing the film. In the example of Fig. 7, a film to be treated 7a is simply sandwiched between two parallel planar substrates 7b to be pressed. Even in such a method, it is possible to form appropriate wrinkles by properly selecting the spacer and pressing conditions.

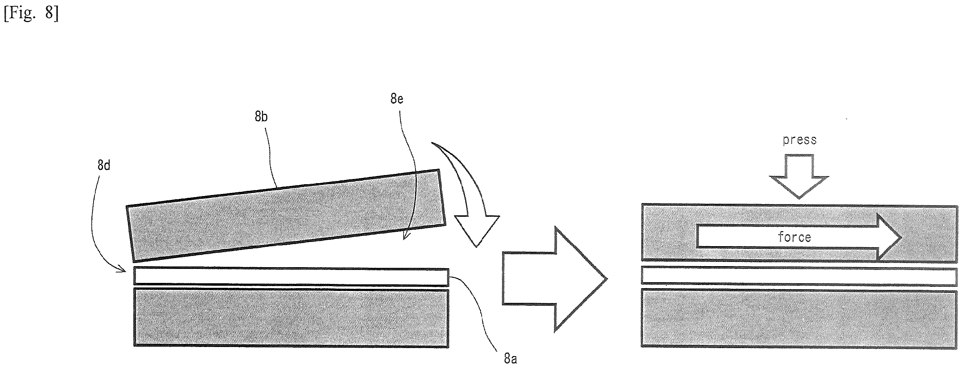

Fig. 8 is a schematic cross-sectional view showing another example of a method of sandwiching a film to be treated with planar substrates (planar press plates) and pressing the film. In this illustrated example, when two planar substrates are used, only a part of the film to be treated is first pressed, and a pressed area is gradually increased so as to widen a region from the part of the film. Even in such a press system, it is possible to control the degree of irregularities of wrinkles. More specifically, in the example shown in Fig. 8, when a film to be treated 8a is heated to a high temperature (carbonization temperature, graphitization temperature, or re-graphitization temperature), the film to be treated 8a is sandwiched in a gap between two sheets of nonparallel planar substrates 8b that are in contact only at a part 8d and then pressed so as to clear a gap 8e between the two planar substrates while the two planar substrates 8b are made parallel to each other after press starting. Accordingly, the film to be treated 8a is pushed and stretched in the order from the end of the film to be treated 8a, thereby forming appropriate wrinkles within a certain range.

A material of the press plate (curved substrate, planar substrate) used for pressing the film to be treated is not particularly limited as long as it has durability against a high treatment temperature, and in general, a carbon material or a graphite-based material is preferable. For example, a substrate made of CIP (Cold Isotropic Press) material that is isotropic graphite or glassy carbon can be used. In the case of the carbonization, a sapphire substrate or the like can also be used.

The press plate preferably has flatness in such a degree that irregularities can be controlled with the spacer. The press plate has a surface roughness (arithmetic average roughness Ra) of, for example, 5 $\mu$m or less, preferably 3 $\mu$m or less, more preferably 1 $\mu$m or less, 0.1 $\mu$m or less, and for example, 0.01 $\mu$m or more. With such a surface roughness, it is possible to control the surface roughness (arithmetic average roughness Ra) of the graphite film with an accuracy of 0.1 $\mu$m unit, 1 $\mu$m unit, 10 $\mu$m unit, 50 $\mu$m unit, or 100 $\mu$m unit.

(2. 4. 3) Pressing conditions

Various factors such as a shape of the press plate (curved substrate, planar substrate), the directionality of the pressing, a kind of the object to be treated (polymer film, carbonized film, graphite film), a kind of the spacer and a particle size are complicatedly involved in the control of wrinkles. Therefore, it is difficult to uniquely determine the pressing conditions, but the conditions may be set within the range of the following conditions while referring to a specific combination in the examples.

That is, the pressing pressure can be suitably set, for example, from the range of 0.3 gf/cm$^2$ or more to 3000 gf/cm$^2$ or less. The pressing pressure is preferably set to 0.4 gf/cm$^2$ or more, 0.6 gf/cm$^2$ or more, 0.8 gf/cm$^2$ or more, 1.0 gf/cm$^2$ or more, or 1.5 gf/cm$^2$ or more. Also, the pressing pressure is preferably set to 2500 gf/cm$^2$ or less, 2000 gf/cm$^2$ or less, 1500 gf/cm$^2$ or less, 1000 gf/cm$^2$ or less, or 500 gf/cm$^2$ or less. When the pressing pressure is too small, wrinkles with too much height are likely to occur against the intention, and when the pressing pressure is too great, it causes breakage, holes or cracks of the film. In addition, when the pressing pressure is too great, a possibility of causing a problem such that the film is hard to be peeled by closely adhesion to the press plate used for pressing increases. Furthermore, when a powerful press mechanism is required, a furnace press device itself becomes large scale.

The pressing pressure may be constant or may be changed. However, as described above, it is a preferable mode that the film is gradually expanded in the film surface direction throughout the film. When a curved substrate is used for pressing while the film is expanded, it is preferable that the warp of the curved substrate gradually becomes flat. Therefore, in this case, when the pressing pressure is to be changed, it is fundamental to gradually increase the pressure.

The pressing time is also suitably set within a range from a short time to a long time according to various conditions, and pressing may be carried out a plurality of times. However, in the pressing during the graphitization, it is desirable not to terminate the pressing at an early stage but to continue the pressing until the temperature reaches the maximum temperature. During the graphitization treatment, the dimension of the graphite film in the film surface direction extends until the temperature reaches the maximum temperature, so that there is a high possibility that nonuniform wrinkles are formed due to subsequent elongation when the pressing is finished at an early stage. In the pressing during the graphitization, it is desirable to start the pressing after the elongation of the graphite film starts. When the pressing is started from an early stage such as before the start of the elongation of the graphite film, the elongation of the graphite film is largely suppressed, and the possibility of generating nonuniform wrinkles is rather increased. As the timing of the pressing during the graphitization, it is preferable that the pressing is started at the stage when the temperature reaches, for example, 2200°C or higher, preferably 2400°C or higher, and more preferably 2600°C or higher, and the pressing is continued until the temperature reaches the maximum temperature. In addition, since the carbonized film is relatively brittle and easily broken, it may be preferable that the timing of the pressing is set to a temperature of 2200°C or higher at which the graphitization starts to some extent when the pressing is carried out with a high pressure such as 1,500 gf/cm$^2$ or more in the graphitization process. In particular, in a case where the polymer film is an aromatic polyimide film, pressing at a large pressure (for example, pressing at the maximum pressure, preferably pressing at 10 gf/cm$^2$ or more, more preferably 100 gf/cm$^2$ or more, and further preferably 1000 gf/cm$^2$ or more) may be preferably carried out at a temperature of 2600°C or higher. Furthermore, in the present invention, the pressing may be carried out even in the vicinity of the maximum temperature by repeating the pressing for a short time. The details of pressure, time, timing and the like of the pressing may be optimized as appropriate.

A pressing means may be a pressing means (a pressing mechanism) capable of mechanically controlling the pressure, or may be a non-mechanical means such as a means using a self-weight of the press plate or a means in which a graphite or carbon weight stone is placed on the press plate. Even with such a non-mechanical means, it is possible to apply a constant load all the while during the carbonization and during the graphitization, and it may be possible to form wrinkles with appropriate height on the graphite film. In addition, this non-mechanical means is effective when pressing with a light load (for example, pressing at less than 10 gf/cm$^2$, preferably 8 gf/cm$^2$ or less, and more preferably 5 gf/cm$^2$ or less) is carried out, where accurate load control by a pressing mechanism is difficult. It is also advantageous that a simple electric furnace without a pressing mechanism can be used.

(2. 4. 4) Spacer

As the spacer, one having both durability against the treatment temperature for the film to be treated and durability against the pressing pressure is desirable, and examples of the spacer include a particulate one and a fibrous one. Examples of the spacer having such characteristics include carbon-based and graphite-based particles, fibers and scales such as glassy carbon particles, graphite particles, graphite scales, fullerenes, carbon fibers and carbon nanotubes; inorganic particles and inorganic scales such as silica, alumina, spherical alumina and scaly boron nitride; particles that are carbonized or graphitized by heating, such as polyimide particles, polyparaphenylenevinylene particles, and polyoxadiazole particles. The spacer also includes substances such as silica that cannot withstand high temperatures such as 2800°C that is the final stage of the graphitization. When such substances can serve as a spacer to a certain high temperature, the winkles themselves formed in the carbonized film or the graphite film also function as a spacer to some extent. Therefore, when the press load is relatively as small as 800 gf/cm$^2$ or less, the substances can be used without problems.

The spacer is more preferably a particle also having a lubricating effect. In order to impart lubricating performance, the spacer, oil as a lubricant, polytetrafluoroethylene particles, boron nitride particles and the like may be used in combination. A carbon-based or graphite-based spacer is easily available, and has an advantage that, even when the spacer is attached to the graphite film or to the inside of an electric furnace, it is less likely to cause problems because the spacer is the same carbon-based substance and also has certain lubricity. Also, since boron nitride has a color different from that of polyimide, carbonized film and graphite film, it has advantages that the disposition (especially dispersion or adhesion) state on the film to be treated or the graphite press plate is easily determined by appearance, and contamination in the electric furnace is also easily determined by appearance. Furthermore, boron nitride is excellent in lubricity.

The average particle diameter (d50) in a case where the spacer is a particulate one, the fiber diameter in a case where the spacer is a fibrous one, and the thickness in a case where the spacer is a scaly one (hereinafter the average particle diameter (d50) of the particles, the diameter of the fiber and the thickness of the scale are collectively referred to as the thickness of the spacer) is, for example, 0.1 μm or more, preferably 1 μm or more, more preferably 5 μm or more, for example, 300 μm or less, preferably 200 μm or less, or more preferably 150 μm or less.

In addition, the thickness of the spacer needs to be controlled within an appropriate range with respect to the thickness of the film (polymer film, carbonized film, graphitized film, or the like) on which the spacer is disposed. The ratio of the arithmetic average roughness Ra of the surface to the thickness of the graphite film can be adjusted by the ratio of the thickness of the spacer to the film thickness. The thickness of the spacer when the film thickness is defined as 1 is, for example, 0.75 or more and 350 or less when appropriate irregularities are formed. Furthermore, it is preferably 1 or more, further preferably 1.5 or more, still preferably 2 or more, still more preferably 2.5 or more, more preferably 3.0 or more, and particularly further preferably 4.0 or more, 5.0 or more, 6.0 or more, or 7.5 or more. In addition, it is preferably 250 or less, more preferably 200 or less, further preferably 150 or less, and still more preferably 100 or less, 75 or less, 50 or less, 25 or less, 20 or less, or 10 or less.

Further, in the case of producing a graphite film having markedly small irregularities, the thickness of the spacer when the film thickness is defined as 1 is 0.4 or less. It is more preferably 0.3 or less, still preferably 0.25 or less, and further preferably 0.15 or less. Also, it is preferably 0.10 or less, and further preferably 0.05 or less. Also, it may be 0.001 or more.

The amount of the spacer is appropriately set in accordance with the size (particle diameter, fiber diameter, or the like) of the spacer within a range where appropriate wrinkles can be formed. For example, in the case of a particulate spacer, the spacer can be used such that the covering rate of the surface of the film to be treated (when each particle is present in a 1 layer without gaps on its surface, the covering rate is defined as 100%) is in the range of about 0.1 to 500%. When the covering rate is too large, the interval between the press plates is mainly controlled by the accumulated thickness of the spacers, not the size of the spacers, and it is difficult to control the interval and to form appropriate wrinkles. On the other hand, when the covering rate is too small, it is difficult to secure a space and to form appropriate wrinkles. In the case of precisely controlling the space (the interval between the press plate and the film to be treated) to more highly control the irregularities, the covering rate is preferably in the range of 0.5 to 100%, and particularly 1 to 50%.

In order to dispose (particularly disperse or attach) the particulate or fibrous spacer on the surface of the film to be treated, for example, a known method may be used as appropriate such as a method of sprinkling a spacer on a film to be treated or a press plate with a hand, a method of applying a spacer to a film to be treated or a press plate with a brush, a method of applying a dispersion in which a spacer is dispersed to a film to be treated or a press plate and then drying the dispersion or a method of sprinkling a spacer on a film to be treated or a press plate using a sieve. When a particulate or fibrous dried substance is used as the spacer, the spacer is once applied to the surface of the film to be treated or the press plate thicker (the covering rate is 100% or more), and thereafter, the surface of the film to be treated or press plate is subjected to turning upside down, swinging, rubbing with a brush or the like to drop the excessive spacer particles. Controlling the covering rate can be easy by this way.

The spacer is not necessarily in the form of a single particle, fiber or the like, and may be a secondary particle formed by aggregation of particles or fibers, a sheet having uniformly distributed particulate protrusions (for example, a form such as a sandpaper), or a nonwoven fabric made by assembling fibrous matters. Further, a mixture of spacers made of plural kinds of substances, and a composite of a particulate, fibrous or scaly spacer, a paste, oil, wax and the like are preferably used from the viewpoint of adjusting lubricity and more finely controlling the degree of irregularities of wrinkles in the graphite film to be formed. In addition, substances used for the paste, oil, wax and the like may be appropriately selected. For example, oils such as mineral oil, synthetic hydrocarbon oil, ester oil, polyglycol oil, silicone oil, fluorine oil, canola oil, and mixtures thereof can be suitably used. Alternatively, modified oils may be used. For example, silicone oils such as epoxy-modified silicone oil, polyether-modified silicone oil, amino-modified silicone oil and epoxy-modified silicone oil can be used. Specifically, application of canola oil containing graphite particles to a film to be treated or a press plate, use of as a spacer a graphite sheet that has graphite particles exposed on its surface and that is obtained by carbonizing and graphitizing a polyimide film containing graphite particles, use of a graphite sheet that has graphite particles formed on its surface by depositing graphite on the graphite sheet as a spacer, use of a thin fabric or nonwoven fabric made of polyacrylonitrile fiber as a spacer, and use of a mixture of spherical alumina particles and boron nitride scales as a spacer are all preferably applied in the method of the present invention. Hereinafter, the size of the surface irregularities of a sheet-like spacer such as a nonwoven fabric or a graphite sheet having graphite particles formed on its surface may be referred to as the thickness of the spacer.

Also, irregularities may be provided on the surface of the press plate, and these irregularities may be used as a spacer. Provision of the surface of the press plate with a certain shape and surface roughness by polishing the surface with sandpaper, sandblasting the surface, polishing the surface with an abrasive, embossing the surface or the like may exhibit the same effect as the case of using a particulate spacer. For example, a press plate that has a surface roughened to a certain extent and that is made of CIP material or glassy carbon is preferably used. It is also a preferred embodiment to use a press plate that has carbon particles, graphite particles, fullerene particles or the like formed on its surface by carbon vapor deposition, graphite vapor deposition, fullerene vapor deposition or the like and that is made of CIP material or glassy carbon. Further, a press plate that is obtained by pressing a carbon fiber at a high temperature to fix the carbon fiber on a surface of the press plate and that is made of CIP material or glassy carbon is preferably used. In a case where the surface of the press plate is roughened so as to have a function as a spacer as described above, it is not necessary to separately use a particulate or fibrous spacer, or the sheet or nonwoven fabric having the function as the spacer described above. Of course, a press plate having a function as a spacer, a particulate or fibrous spacer, or a sheet or nonwoven fabric having a function as a spacer may be used in combination. Hereinafter, the size of the surface irregularities of the press plate may be referred to as the thickness of the spacer.

The kind of the spacer may be appropriately selected depending on the degree of wrinkle height in a desired graphite film, handling property and production process, and is not limited to the contents of the examples described below. As the press treatment for the carbonization and the graphitization, for example, 1) the pressing may be performed in a press furnace equipped with a press mechanism, using dome-shaped glassy carbon plates having streak-like irregularities that extend radially from the center and that are formed on the surface as press plates and using scaly boron nitride applied to the press plate with a brush as spacer particles. Further, 2) the pressing may be performed in a press furnace equipped with a press mechanism, using mirror-polished CIP material flat plates as press plates and using a mixture of graphite powder and spherical alumina, as a spacer, which is sprinkled on both surfaces of a film to be treated (polyimide film, carbonized film, or the like) with use of a sieve. Alternatively, 3) a film to be treated (polyimide film, carbonized film, or the like) with amino-modified silicone oil applied on its both surfaces is sandwiched between graphite sheets with carbon deposited on their surfaces, and this is further sandwiched between CIP material flat plates that serve as both a press plate and a heavy stone from the upper and lower sides, then the pressing may be performed by the weight of the CIP material flat plates. Further, 4) mirror-polished dome-shaped glassy carbon plates are used as press plates, a material obtained by applying a dispersion liquid containing polyimide particles onto both surfaces of a polyimide film to be dried is used as a spacer, and further a heavy stone of a CIP material flat plate is loaded on the press plate, so that the pressing may be performed by the heavy stone. 5) The pressing may be performed in a press furnace equipped with a press mechanism, using mirror-polished CIP material flat plates as press plates and using film scaly boron nitride applied on both surfaces of a film to be treated (polyimide film, carbonized film, or the like) with a brush as a spacer. 6) A film to be treated (polyimide film, carbonized film, or the like) is sandwiched between glassy carbon flat plates that have streak-like irregularities extending radially from the center on their surfaces and whose surfaces are coated with ester oil in which boron nitride is dispersed, and the resultant may be pressed in a press furnace equipped with a press mechanism. In any of the above methods, certain lubricity is also provided while a uniform space with a fixed interval is maintained between press plates having a certain level of flatness and a film to be treated by allowing a spacer to exist between the press plates and the film to be treated (also including a case where irregularities formed on the surface of the press plate are used as a spacer), and the pressing is performed with an appropriate load. This makes it possible to form appropriate wrinkles. The press plates, the spacer, the lubricant, the film to be treated (polyimide film, carbonized film, or the like), the loaded state and the like may be optimized appropriately in a range that such function can be maintained.

The method for producing the graphite film is superior in productivity because many films to be treated can be stacked and fired at once. In addition, the above method is applicable even when the thickness of the film to be treated is extremely as thin as 200 nm or less and the film to be treated is physically easily broken. Note that the substrate used for the pressing sticks to the graphite film, and the graphite film may be damaged when being peeled off, so that it is necessary to delaminate the graphite film carefully in some cases.

According to the method for producing the graphite film, it is possible not only to form appropriate wrinkles, to control the ratio of the arithmetic average surface roughness (Ra) to the thickness within an appropriate range, but also to reduce variations of various characteristics among graphite films, and to reduce the defective product rate. For example, according to the method for producing the graphite film, the ratio of the average value of Ra and the average value of the thickness (Ra average value/thickness average value) is calculated for one graphite, and when the ratios are averaged among a plurality of graphite films, the Ra average value/the average thickness value of each graphite film is, for example, within $\pm$ 50%, and preferably within $\pm$ 40% of the average value among a plurality of graphite films.

Further, when the average value of Ra is calculated for one graphite film and the values are averaged among a plurality of graphite films, the Ra average value of each graphite film can be set, for example, within $\pm$ 40% and preferably within $\pm$ 30% of the average value among a plurality of graphite films.

When the average value of electrical conductivity is calculated for one graphite film and the values are averaged among a plurality of graphite films, the average value of electrical conductivity of each graphite film can be also set, for example, within $\pm$ 35% and preferably within $\pm$ 25% of the average value among a plurality of graphite films.

When the average value of thickness is calculated for one graphite film and the values are averaged among a plurality of graphite films, the average value of thickness of each graphite film can be also set, for example, within $\pm$ 25% and preferably within $\pm$ 15% of the average value among a plurality of graphite films.

When the average value of density is calculated for one graphite film and the values are averaged among a plurality of graphite films, the average value of density of each graphite film can be also set, for example, within $\pm$ 10% and preferably within $\pm$ 5% of the average value among a plurality of graphite films.

(3) Graphite film shape and processing

There is no particular limitation on a shape of the graphite film when the graphite film is used, and square shape, rectangular shape (tape shape), circular shape, fan shape, donut shape, L-shape, U-shape, a shape having a large number of holes such as punched metal or the like can be preferably used. However, the shape easily exhibiting the effect of high durability that is a feature of the present invention is a shape requiring high durability, for example, a thin and elongated shape, and examples thereof include a graphite tape. The graphite tape has a width of, for example, 40 mm or less, preferably 20 mm or less, 10 mm or less, 8 mm or less, 5 mm or less, 3 mm or less, 2 mm or less or 1 mm or less, and usually 0.2 mm or more. The narrower width provides a merit of using the graphite film of the present invention. The length of the graphite tape is not less than 5 times, preferably not less than 8 times, not less than 10 times, not less than 15 times, not less than 20 times, not less than 50 times or not less than 100 times, and usually not more than 1000 times the above width. As long as the graphite tape has a parallel portion having the width and the length, the shape of the other portion (for example, both end portions of the parallel portion) is not particularly limited. For example, a graphite tape whose both ends are attached to a frame body without being processed, which is obtained by attaching a graphite film to the frame body and cutting a part floating in space to leave the parallel portion, is also included in the graphite tape of the present invention.

Since wrinkles are appropriately controlled with respect to the thickness of the graphite film, even when only a part of the graphite film is heated to a high temperature, the graphite film can be processed appropriately without reaching a breakage or the like. For example, fine drilling or cutting processing using an electron beam, a laser beam or the like (preferably a laser beam) is also applicable, and the graphite film may be processed into the above shape by such processing. In particular, the superiority due to the improved processing durability (in particular, the difficulty of occurrence of fractures such as puncture, cracking, and breakage when a processing method to apply heat only to a part is applied) remarkably appears in the case of performing fine processing such as cutting into an elongated shape, for example, in the case of processing to a graphite tape. In the case of a particularly thin graphite film, this superiority particularly remarkably appears. During such processing, the graphite film may be fixed on a substrate or the like and supported on the surface of the substrate, may be in a floating state in space, in a state of being applied with tension, or in a state of being appropriately loose.

(4) Use of graphite film (including processed body such as graphite tape, the same applies hereinafter in this section)

(4. 1) Temperature, atmosphere

Since wrinkles are appropriately controlled with respect to the thickness, the graphite film of the present invention is excellent in heat resistance when used in a state in which a part of the graphite film is floated in space, particularly, excellent in durability against thermal cycle, heat resistance at the time of partial heating, and durability against partial thermal cycle, and a tape obtained from this graphite film is also excellent in durability. Because of such excellent heat resistance and durability, the graphite film (including graphite tape) exhibits excellent performance when used in such a way that the temperature of the portion reaching the maximum temperature is 900°C or higher, for example. When the maximum temperature is 1100°C or higher, or 1300°C or higher, an excellent effect is further remarkably exhibited, and the effect is more remarkable when the maximum temperature is 1400°C or higher, 1500°C or higher, 1700°C or higher, 1900°C or higher, 2100°C or higher, 2300°C or higher, 2500°C, 2700°C, 2900°C or higher, or 3100°C or higher. The upper limit of the maximum temperature may be a heat resistance temperature of the graphite film itself, and is, for example, 3400°C or lower.

In the case of using the graphite film in vacuum, graphite easily sublimes as compared with the case of an inert gas atmosphere such as an argon gas atmosphere, and in general, puncture, cracking, breakage or the like of the graphite film relatively tend to occur. Therefore, when the graphite film is used in vacuum, the superiority (heat resistance, durability) of the graphite film of the present invention tends to remarkably appear even at a lower temperature (for example, 900°C or higher, preferably 1100°C or higher, 1300°C or higher, 1400°C or higher, 1500°C or higher, 1700°C or higher, 1900°C or higher, or 2100°C or higher), as compared with the case of an inert gas atmosphere.

In addition, when the difference in temperature between the portion of the graphite film reaching the maximum temperature and the portion of the graphite film reaching the minimum temperature is as large as, for example, 300°C or higher, preferably 400°C or higher, 500°C or higher, 700°C or higher, 900°C or higher, 1100°C or higher, or 1300°C or higher, the superiority of the graphite film of the present invention (good heat resistance and good durability) tends to remarkably appear. In the case of using a plurality of graphite tapes, the difference between the maximum temperature part in the entire graphite tapes and the minimum temperature part in the entire graphite tapes is preferably within the above numerical ranges.

The atmosphere in which the graphite film is used may be vacuum or an inert gas atmosphere. Sublimation of the graphite film can be suppressed by using an inert gas atmosphere. As the inert gas, nitrogen, argon or helium is preferably used, and argon and helium are particularly preferable. In order to prevent sublimation of graphite, the pressure of the inert gas may be raised, and is, for example, 0.1 MPa or more, preferably 0.15 MPa or more, 0.20 MPa or more, 0.30 MPa or more, 0.40 MPa or more, 0.50 MPa or more, 0.6 MPa or more or 0.8 MPa or more. The upper limit of the pressure is not particularly limited, and may be 1 MPa or less.

The atmosphere in which the graphite film is used is preferably a non-oxidizing atmosphere, and it is particularly preferable that oxygen is not present. This is because, in the oxidizing atmosphere, the graphite film is oxidized in a high-temperature environment and rapidly consumed. For this reason, the inert gas used as the atmospheric gas is preferably high in purity. Further, when the graphite film is used in vacuum, the degree of vacuum is preferably high. The degree of vacuum when the graphite film of the present invention is used in vacuum is preferably 1000 Pa or less, further preferably 100 Pa or less, and more preferably 10 Pa or less, 1 Pa or less, $1 \times 10^{-1}$ Pa or less, $1 \times 10^{-2}$ Pa or less, $1 \times 10^{-3}$ Pa or less, $1 \times 10^{-4}$ Pa or less, $1 \times 10^{-5}$ Pa or less, $1 \times 10^{-6}$ Pa or less, $1 \times 10^{-8}$ Pa or less, or $1 \times 10^{-10}$ Pa or less, and may be $1 \times 10^{-12}$ Pa or more.

(4. 2) Fixed state

The graphite film of the present invention may be used by being laminated with a substrate, but the graphite film is preferably used in a state of having a part floating in space (for example, a part is fixed to a support member and the rest floats in space). The graphite film of the present invention is excellent in durability at a portion not supported by a support, and can be stably used even while floating in space. Conventionally, a single graphite film with high electrical conductivity, thin and large area can't have such durability.

In order to make the graphite film of the present invention float in space by itself, for example, a known method such as a method of fixing only the upper part and hanging the graphite film from above, a method of hanging the graphite film from above using a string-like member or rod-like member, a method of attaching a string-like member to four corners and pulling the graphite film in four directions, a method of fixing both ends to a frame or the like and stretching the graphite film, a method of fixing the outer circumference to a frame or the like and stretching the graphite film, a method of spreading a plurality of thread-like members like a net and inserting the graphite film into therebetween, a method of floating the graphite film with magnetic force or air force, and a method of sandwiching and fixing only the central part of the graphite film, may be appropriately used. When a graphite tape is used while floating in space, a plurality of graphite tapes are preferably aligned in parallel, and both ends of each tape are preferably fixed to a common support member. The graphite film (including the graphite tape) may be stretched tightly, or it may be set in a state of being appropriately loose depending on the application. A member supporting the graphite film may be preferably provided with a cooling mechanism such as a heat sink, a cooling fan, cooling water, a Peltier element, or the like.

When a part of the graphite film is used while floating in space, the proportion of the area of the part floating in space out of the entire area of the graphite film is preferably 10% or more. It is more preferably 20% or more, further preferably 30% or more, 40% or more, 50% or more, 60% or more, 70% or more, 80% or more or 90% or more, and may be 95% or less. A part of the graphite film is often heated to a high temperature. As the area of the part floating in space increases, the support member is prevented from becoming high temperature together with the graphite film, and a fear of exceeding the heat resistance of the support member during use is decreased. It is useless that the portion of the graphite film fixed to other members is unnecessarily enlarged, and it is possible to reduce the useless portion by increasing the area of the portion floating in space.

(4. 3) Application

Examples of specific applications of the graphite film include a light emitter of a light emitting device; a filament; a high heat resistant wire with high current capacity; an electric resistance type heating element; a protective film and a reflecting member, a support substrate, an absorbing member, a transmitting member, a diffractive member, a sensor, a thermal diffusion member, a subject, a workpiece or the like in an apparatus, an analyzing method or a processing method in which a strong infrared ray, an ultraviolet ray, an X ray, a laser beam, an ion beam, a proton beam, a negative hydrogen ion beam, a neutron beam, an electron beam or the like is radiated. In these applications, at least a part of the graphite film becomes a very high temperature such as 900°C or higher. Also, in many applications, a very high temperature portion and a non-high temperature portion are simultaneously present in one graphite film. In many more applications, heating and cooling are repeated. Even when the graphite film is used for such applications, the graphite film of the present invention is excellent in heat resistance and durability, and the service life of the graphite film can be prolonged.

Particularly preferable applications are such that a part of the graphite film is fixed to a support member and the rest floats in space, and the portion floating reaches the maximum temperature, and more preferable applications are such that the graphite film is heated by any of electric conduction, infrared irradiation, laser beam irradiation and ion beam irradiation to reach the maximum temperature. Examples of such applications include an absorbing member, a transmitting member, a diffractive member, a sensor, a thermal diffusion member, a charge conversion film member, a film member for supporting a target, a support film member for radioisotope production, and a film member for ion beam attenuator (that reduces the energy of individual particles of the ion beam and the number of particles, for example, (attenuator, energy degrader, absorber)) in an apparatus, an analyzing method or a processing method in which a strong infrared ray, an ultraviolet ray, an X ray, a laser beam, an ion beam, a proton beam, a negative hydrogen ion beam, a neutron beam, an electron beam or the like is radiated.

This application claims benefit of priority based on Japanese Patent Application No. 2016-015082 filed on January 29, 2016. The entire content of the specification of Japanese Patent Application No. 2016-015082 filed on January 29, 2016 is incorporated herein by reference.

EXAMPLES

The present invention will be described below more specifically with reference to examples, but the present invention is not originally limited to the following examples. The present invention can be also carried out after appropriate modifications or variations within a range meeting the gist described above and below, all of which are included in the technical scope of the present invention.

Measurement methods of physical properties in the following examples are collectively shown below.

(1) Thickness of polyimide film and variation of the thickness among films

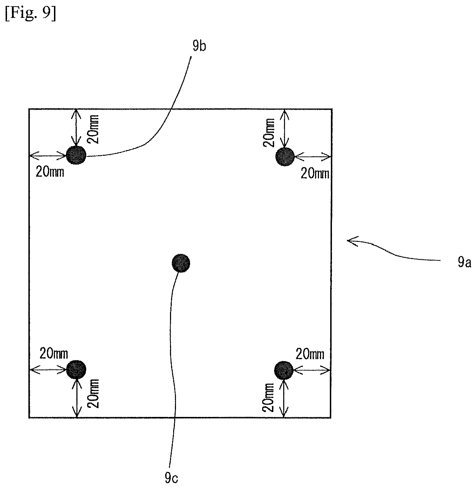

Fig. 9 is a schematic plan view showing thickness measurement positions of a polyimide film. Positions 9b that are 20 mm apart from each side at four corners of a square polyimide film 9a are set as thickness measurement positions (total of four positions), and five positions, which are the above measurement positions and a center (centroid) 9c, are set as thickness measurement positions. The thickness was measured with a contact type thickness meter for each position, and the average value was determined as the thickness of the polyimide film.

In the following example, the thicknesses of ten polyimide films produced were measured, and seven films which are close to the average value were selected, and the average value of the thicknesses of the seven films was determined as the thickness of the polyimide film in the following example. The ratio (variation, %) of the thickness of each of the selected seven polyimide films to the average value of the seven films was determined as the variation among films.

(2) Thickness measurement of graphite film

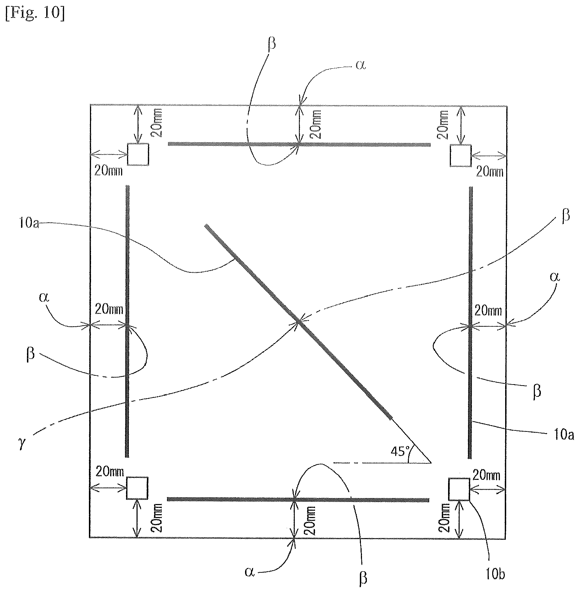

Four samples each having a size of 5 mm × 5 mm were cut out from four positions 10b (indicated by squares in the figure) at four corners of the film shown in Fig. 10, and the thickness of each sample was measured by a contact type thickness meter, and the average value at the four positions was determined as the thickness of the graphite film.

In the following examples, the thicknesses of seven graphite films produced were measured, and the average value thereof was determined as the thickness of the graphite film in each example. Also, five films which are close to the average value were selected, and the ratio (variation, %) of the thickness of each of the selected five graphite films to the average value of the five films was determined as the variation among films.

(3) Electrical conductivity of graphite film

The electrical conductivity (sheet resistance) of the graphite film was measured by the van der Pauw method. This method is the most suitable method for measuring the sheet resistance of a thin film sample. Details of this measurement method are described in the (fourth) Series of Experimental Chemistry 9 Electricity and Magnetism (edited by The Chemical Society of Japan, published by Maruzen Co., Ltd. (published on June 5, 1991) (P170). A feature of this method is that a measurement by attaching electrodes to arbitrary four points in an end portion of a thin film sample with an arbitrary shape can be performed, and when the thickness of the sample is uniform, the accurate measurement of the sheet resistance can be performed. From the measured values of the sheet resistance and the thickness of the graphite film, the accurate electrical conductivity of the graphite film can be obtained. In the present invention, four samples each having a size of 5 mm × 5 mm were cut out from the four positions 10b (indicated by squares in the figure) at the four corners of the film shown in Fig. 10. A silver paste electrode was attached to each of the four corners (edges) of each sample, and the sheet resistance was measured using a resistivity/DC & AC Hall measurement system, ResiTest 8300 manufactured by TOYO Corporation, to obtain the electrical conductivity. The average value of the four positions was determined as the electrical conductivity of the graphite film.

In the following example, the average value of the electrical conductivity for the five graphite films selected in the thickness measurement was calculated, and this value was determined as the electrical conductivity of the graphite film in each example. The ratio (variation, %) of the electrical conductivity of each of the selected five graphite films to the average value of the five films was determined as the variation among filmes.

(4) Arithmetic average roughness Ra and Ra/thickness ratio of graphite film

(4. 1) Arithmetic average roughness Ra

The value under a room temperature atmosphere of the surface roughness (arithmetic average roughness) Ra of the graphite film was measured using the surface roughness measuring instrument Surfcom DX (manufactured by TOKYO SEIMITSU CO., LTD.) in accordance with JIS B 0601. Fig. 10 is a plan view of an about 18 cm square graphite film, and the measurement positions of the surface roughness Ra are the central parts ($\beta$) of the five line segments 10a in Fig. 10. In the figure, $\alpha$ is the midpoint of one side of the graphite film, $\beta$ is the midpoint of the line segment 10a, and $\gamma$ is the centroid of the graphite film. For example, when Ra was larger than 80 $\mu$m, the evaluation length was set to 125 mm and the reference length L (cutoff value) was set to 25 mm. When Ra was more than 10 $\mu$m and 80 $\mu$m or less, the evaluation length was set to 40 mm and the reference length L (cutoff value) was set to 8 mm (the reference length in the case of other Ra is determined in accordance with JIS B 0633). When the part of the reference length L is cut from the chart drawn at a feed rate of 0.05 mm/sec and the roughness curve is expressed Y = f(X) regarding the center line of the cut part as the X axis and regarding the longitudinal direction as the Y axis, the arithmetic average roughness Ra is the value obtained by the following formula (1) and expressed in $\mu$m. The value of Ra was calculated at each of the five positions of the graphite film (the central parts $\beta$ of the five line segments 10a), and further the average value of Ra at the five positions was obtained, and the average value was determined as the arithmetic average roughness Ra of the graphite film.

[Expression 1]

$$Ra = \frac{1}{L}\int_0^L |f(x)| dx \quad ... (1)$$

In the following example, for the five graphite films selected in the thickness measurement, an average value of the thickness was further obtained, and three sheets which are close to this average value are selected. The arithmetic average roughness Ra was calculated for these three graphite films, and the average value thereof was determined as the arithmetic average roughness Ra in the following example. Also, the ratio (variation, %) of the Ra of each of the three films to the average value of the three films was determined as the variation among films.

(4. 2) Ra/thickness ratio

Thicknesses (measured at four positions per graphite film) were measured in the same manner as described above for each of the three graphite films selected at the time of determination of the arithmetic average roughness Ra (measured at five positions per graphite film). The ratio of the arithmetic average roughness Ra ($\mu$m)/thickness ($\mu$m) was calculated for each of the graphite films, and the average value thereof was determined as the Ra ($\mu$m)/thickness ($\mu$m) ratio in the following example. Further, the ratio (variation, %) of the ratio of Ra ($\mu$m)/thickness ($\mu$m) in each graphite film to the average value of three sheets was determined as the variation among films.

(4. 3) variation of Ra in a film

An average value of the thicknesses was calculated for the five graphite films selected in the thickness measurement, and one film closest to this average value was selected. For this one graphite film, the arithmetic average roughness Ra of each measurement position (five positions) was measured and the ratio (variation, %) of the measurement result at each position to the average of the five positions was determined as the variation in the graphite film.

(4. 4) Density measurement of graphite film

The density of the graphite film was measured using dry automatic density meter AccuPyc II 1340 (manufactured by Shimadzu Corporation). The density of each of the five graphite films selected in the thickness measurement was measured one by one. The ratio (variation, %) of the density of each of the five graphite films to the average value of these five films was determined as the variation among films.

(5) Thermal cycle durability test

(5. 1) Overview

With respect to the thermal cycle durability of the graphite film, evaluation was carried out by two types of heating systems, that is, an electrical heating system in which an electric current is passed through the graphite film to generate heat, and an infrared heating system in which the graphite film is irradiated with infrared light and heated. The test of the electrical heating system was performed both in an argon gas atmosphere (0.105 MPa to 0.11 MPa) and in vacuum (10 Pa or less). Further, the infrared heating system test was performed in vacuum.

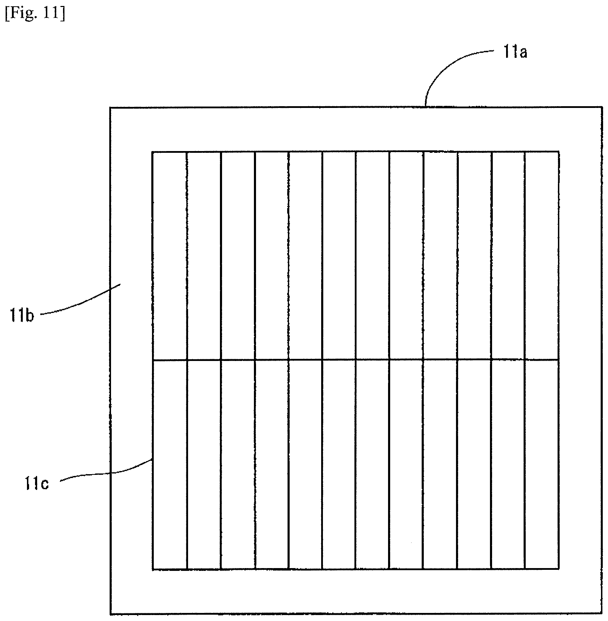

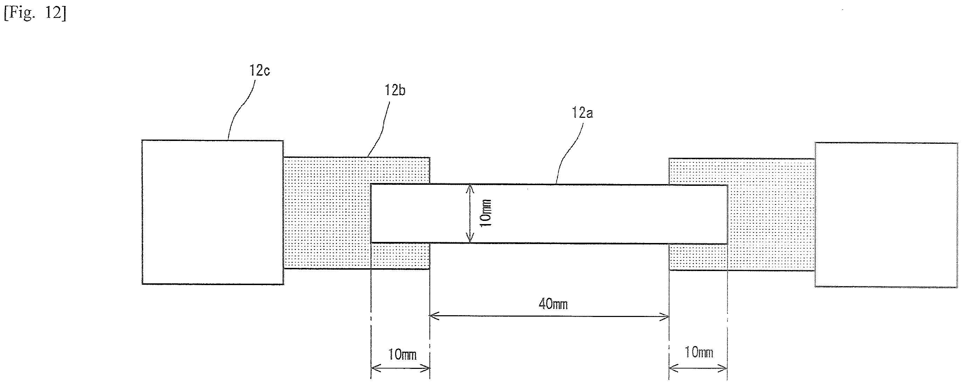

Fig. 11 is a conceptual diagram for showing a method of cutting out test pieces for the thermal cycle durability test from an about 18 cm square graphite film 11a obtained in the following example, and twenty-four 1 cm × 6 cm rectangular test pieces 11c were cut out with avoiding a portion of edges 11b of the graphite film. Fig. 12 is a conceptual diagram showing a fixing method of a test piece used in the thermal cycle durability test. A 1 cm × 6 cm rectangular test piece 12a (11c) cut out from the graphite film was cut out and fixed to a graphite holder 12b at both parts throughout 1cm from the end, and the central portion with a length of 4 cm was made floated in space. Note that the graphite holder 12b can be cooled by a copper cooling water jacket 12c connected thereto. Further, in the electrical heating system, the graphite holder 12b and the copper cooling water jacket 12c both serve as electrodes for applying current.

(5. 2) Durability during electrical heating

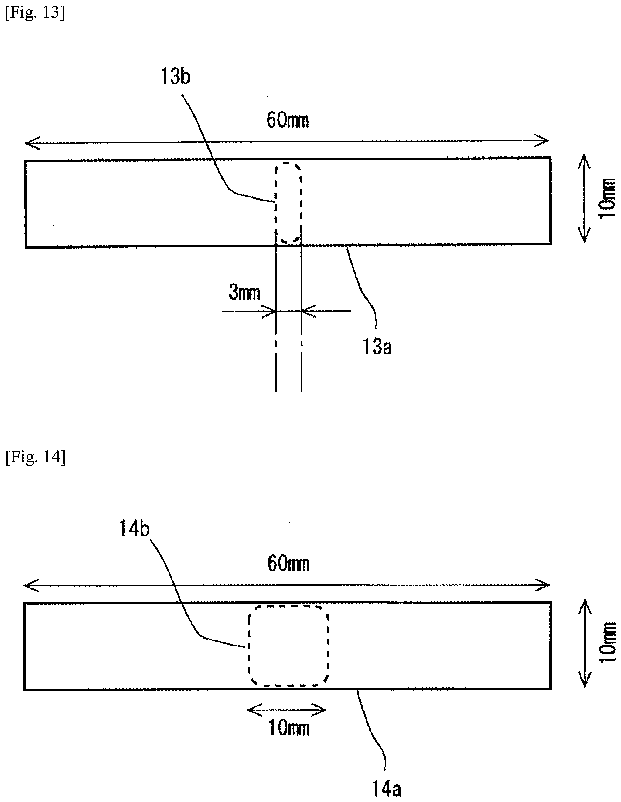

As shown in Fig. 12, an electric current was passed through in the long side direction of the fixed test piece. As a result of this current application, a portion 13a (1 cm × 4 cm) floating in space of the graphite film is heated, and particularly a portion 13b having a length of about 1 cm in the short side direction and about 3 mm in the long side direction in the center becomes selectively very high temperature (see Fig. 13. both end parts of the portion 13a floating in space of the graphite film are not very hot due to the cooling effect of the copper cooling water jacket 12c.) The temperature of the graphite holder 12b is measured by a thermocouple, and its value differs depending on the use conditions, but it is 500°C or less at most, and it is often 400°C or less, 300°C or less, or 200°C or less in many cases. Therefore, the graphite film 13a when electrically heated to the maximum temperature has a large temperature difference between the central portion 13b and both end parts.

The temperature of the center 13b of the graphite film was measured with a two-color thermometer (model number IR-CAQ53, manufactured by CHINO CORPORATION) and a radiation thermometer (model number FT3701, manufactured by HIOKI E.E. CORPORATION). The durability test was performed with a maximum temperature in the center 13b of the graphite film of each 2700°C, 2500°C, 2300°C or 2100°C (0.105 MPa to 0.11 MPa in an argon gas atmosphere) and 2100°C, 1900°C, 1700°C, 1500°C, 1300°C, 1100°C or 900°C (10 Pa or less in vacuum). Specifically, the following procedure was repeated: current was applied to the graphite film 13a with a gradual increase, and after the center 13b of the graphite film reached the maximum temperature, the graphite film was kept at the maximum temperature for 10 seconds, then the graphite film 13a was cooled by stopping current application, and when the temperature of the center 13b of the graphite film became 300°C or less, current application to the graphite film 13a was resumed. Then, the number of repeated heating at each maximum temperature until the graphite film 13a was broken (completely cut) was recorded. When the graphite film 13a did not break even with a sufficiently large number of times of heating (100 times, 200 times or 300 times), the test was terminated, and the number of times of heating at each maximum temperature was recorded as ">100", ">200" or ">300". Whether or not the graphite film 13a had broken was determined by visual observation and whether or not the electric resistance between both ends of the graphite film 13a was 1 MΩ or more (broken) or not (not broken).

(5. 3) Durability during infrared heating

The test piece fixed as shown in Fig. 12 was irradiated with infrared rays, and the center 14b of a portion 14a (1 cm × 4 cm) floating in space, 14b having a length of about 1 cm in the short side direction and about 1 cm in the long side direction, were selectively heated to a very high temperature (see Fig. 14). The temperature of the graphite holder 12b is measured by a thermocouple, and its value differs depending on the use conditions, but it is 500°C or less at most, and it is often 400°C or less, 300°C or less, or 200°C or less in many cases. Therefore, in the graphite film 14a heated to the maximum temperature by infrared rays has a large temperature difference between the central portion 14b and both end parts.

The temperature of the center 14b of the graphite film was measured with a two-color thermometer (model number IR-CAQ53, manufactured by CHINO CORPORATION) and a radiation thermometer (model number FT3701, manufactured by HIOKI E.E. CORPORATION). The durability test was performed with a maximum temperature in the center 14b of the graphite film of each 1700°C, 1400°C or 1100°C (10 Pa or less in vacuum). Specifically, the following procedure was repeated: the graphite film 14a was irradiated with infrared rays, and after the center 14b of the graphite film reached the maximum temperature, the graphite film was kept at the maximum temperature for 10 seconds, then the graphite film 14a was cooled by stopping infrared irradiation, and when the temperature of the center 14b of the graphite film became 300°C or less, infrared irradiation to the graphite film was resumed. Then, the number of times of heating up to the maximum temperature until the graphite film 14a was broken (completely cut) was recorded. As with the case of electrical heating, the upper limit of the number of repetitions was set to 100 or 200, and the results of not breaking at the upper limit number of times were expressed as ">100", ">200".

(6) Laser cut test

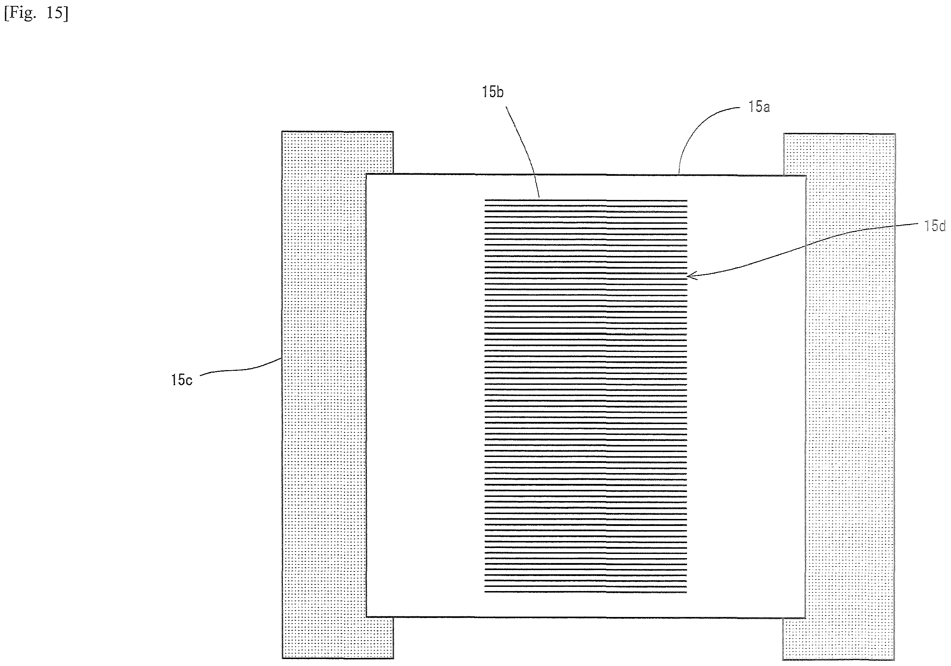

Fig. 15 is a conceptual diagram for explaining an outline of the laser cutting test. As shown in Fig. 15, two opposite sides of an about 18 cm square graphite film 15a were pasted to a copper frame 15c with an adhesive, and the graphite film 15a was stretched horizontally in space. Notches 15b having a predetermined length (5 cm or 10 cm) were formed in the central portion of the stretched graphite film at a predetermined interval (interval of 1.2 mm at a length of 5 cm, interval of 1.0 mm at a length of 10 cm) by laser irradiation. The number of notches 15b was 101 (in the figure, illustrated omitting the number), and the number of broken pieces among 100 tape-like portions 15d sandwiched between them was counted. The number to be counted is the number of the tape-like portions 15d that were completely cut, including both ends. The presence or absence of breakage was determined by visual observation, and electric resistance measurement (whether it is 1 MΩ or more (broken) or not (not broken)) with a 2-terminal tester after taking out the tape alone.

For the laser cutting, MD-T1010 manufactured by Keyence Corporation was used, a laser power was set to 80%, a Q switch frequency was set to 100 kHz, and the scan speed was appropriately adjusted according to the thickness of the graphite film. For example, when the thickness of the graphite film was 0.9 μm, the scan speed was set to 1200 mm/s.

(Example 1)

<Formation of Polyimide Film>

An imidization accelerator consisting of 20 g of acetic anhydride and 10 g of isoquinoline was mixed with 100 g of a 18 wt% DMF solution of polyamic acid synthesized at a molar ratio of 1/1 (i.e., 4/4) of pyromellitic dianhydride (PMDA) and 4,4'-diaminodiphenyl ether (ODA), and the mixture was stirred, and defoamed by centrifugal separation, then casted and applied onto an aluminum foil. The process from stirring to defoaming was performed while being cooled to 0°C. A laminate of the aluminum foil and the polyamic acid solution was heated at 100°C, 250°C, and 450°C for 60 seconds each, and then the aluminum foil was removed by etching to prepare ten square polyimide films with 20 cm × 20 cm, and seven films were selected based on the criteria described in the measurement of the thickness of the polyimide film. The average thickness of the seven films selected was 22.1 $\mu$m, and the variation among the seven films was within ±15%.

<Carbonization>

The selected seven polyimide films were each sandwiched between graphite gaskets, heated to 950°C at a rate of 2°C/min in a nitrogen gas atmosphere using an electric furnace, kept at 950°C for 10 minutes, then cooled naturally to obtain a carbonized film.

<Graphitization>

Scaly boron nitride as a spacer having an average particle diameter (d50) of 7.4 $\mu$m was applied on both surfaces of each of the obtained seven carbonized films with a brush, then the carbonized film was vertically hung down with holding one side of the edge of the carbonized film and slightly shaken to drop the extra scaly boron nitride.
The seven carbonized films having scaly boron nitride attached on both sides were sandwiched among eight dome type glassy carbon (GC) plates that had mirror surfaces and that are aligned so that GC and the carbonized films were alternately stacked (Fig. 6). The dome type GC plate has a diameter of 32 cm, a radius of curvature in one surface (the inner surface of the dome) of 300 cm, and a radius of curvature in other surface (the outer surface of the dome) of 280 cm.
A laminate with eight GC and seven carbonized films was sandwiched between second press plates 6c made of glassy carbon and graphitized in an electric furnace with a press function. The graphitization was carried out by raising the temperature to 2800°C (maximum temperature) at a rate of 2°C/min in an argon gas atmosphere, keeping the temperature at 2800°C (maximum temperature) for 20 minutes and then allowing the laminate to cool naturally. During this graphitization, the carbonized film (graphite film) was pressed stepwisely through the press plates 6c. That is, after the temperature reached 2200°C, the pressing was started at a pressure of 8 gf/cm$^2$ and then the press load was linearly increased such that the press load became 2,500 gf/cm$^2$ (maximum pressure) when the temperature reached 2800°C (maximum temperature). The pressing was continued at a load of 2500 gf/cm$^2$ (maximum pressure) for 20 minutes after the temperature reached 2800°C (maximum temperature), and then the pressing was finished. The pressing pressure was determined based on an area of a circle with a diameter of 32 cm. The direction of the pressing was set to be perpendicular to the film surface of the carbonized film (graphite film). As a result, seven square graphite films having uniform wrinkles over the entire of one side with approximately 18 cm were obtained.

(Examples 2 to 31 and Comparative Examples 1 to 7)

Each condition was changed as shown in Tables 1 and 2 below. In the tables, the parts where the same content is described mean that the same operation was carried out, and the points not shown in the table mean that the same manner as in Example 1 was carried out.
In the example such as Example 3 in which the composition (PMDA/ODA/PDA) was described as 4/3/1 a polyimide film was prepared in the same manner as in Example 1 except that a DMF solution of 18 wt% of polyamic acid synthesized at a molar ratio of 4/3/1 of pyromellitic dianhydride (PMDA), 4,4'-diaminodiphenyl ether (ODA) and p-phenylenediamine (PDA) was used.
In the examples such as Example 26 in which the composition (PMDA/ODA/PDA) was described as 4/2/2, a polyimide film was prepared in the same manner as in Example 1 except that a DMF solution of 18 wt% of polyamic acid synthesized at a molar ratio of 4/2/2 of pyromellitic dianhydride (PMDA), 4,4'-diaminodiphenyl ether (ODA) and p-phenylenediamine (PDA) was used.
In the examples such as Example 5 in which "CIP material planar substrate" was describedas a press plate, two CIP material planar substrates whose surfaces were mirror-polished were used as press plates, and a carbonized film having spacer particles attached thereto was inserted between the two CIP material planar substrates. Seven sets of this set were prepared and graphitized with the same pressing conditions and graphitization conditions.

In the examples such as Example 10 in which the press timing was specified at both the carbonization and the graphitization and the CIP material planar substrate was specified as the press plate, spacer particles were applied on both surfaces of the selected seven polyimide films with a brush, then the polyimide film was vertically hung down with holding one side of the edge of the polyimide film and slightly shaken to drop the extra spacer particles. In this way, seven sets of polyimide films having spacer particles attached to both surfaces were sandwiched from the upper and lower sides of a 24 cm square CIP material planar substrate whose surfaces were mirror-polished were prepared, and these were planarly arranged and set in an electric furnace for carbonization. A weight of the CIP material was placed on the upper CIP material planar substrate of each of the seven sets, and the carbonization was carried out while pressing with the weight of the CIP material. After the carbonization, the obtained carbonized film was sandwiched between the CIP material planar substrates and further planarly arranged in the electric furnace for graphitization in a state of being pressed by the weight of the CIP material from the upper side, the graphitization was carried out while the pressing was performed with the weight of CIP material as in the case of the carbonization. The pressing pressure is a value obtained by dividing the total value of the gravitational force applied to the CIP material planar substrate and the weight of the CIP material on the upper side of the polyimide film (carbonized film) by the area of the square of a 24 cm square CIP material planar substrate, and the pressing pressure is 1.0 gf/cm$^2$ in Example 10.

In the examples such as Example 27 in which the oil component was described in the lower part of the column of the spacer particles, it mean that a material in which the spacer particles were dispersed in the oil component was applied to the polyimide film (in the case where the press timing was at both the carbonization and the graphitization) or the carbonized film (in the case where the press timing was only at the graphitization).

Tables 1 to 5 show the working conditions and the working results of all examples and comparative examples.

[Table 1]

| | Raw material polyimide film | | | Pressing conditions | | | | | | Maximum temperature of graphitization (°C) |
|---|---|---|---|---|---|---|---|---|---|---|
| | Composition (PMDA/ ODA/ PDA) | Average thickness ($\mu$m) | variation of thickness among films | Timing | | Press plate | Spacer particles | | Maximum applied pressure (gf/ cm$^2$) | |
| | | | | On carbonization | On graphitization | | Type (Oil used together) | Average particle size (d50) ($\mu$m) | | |
| Example 1 | 4/4/0 | 22.1 | Within ± 15% | - | Performed | Dome-shaped GC | Boron nitride | 7.4 | 2500 | 2800 |
| Example 2 | 4/4/0 | 9.9 | Within ± 15% | - | Performed | Dome-shaped GC | Silica | 1.0 | 500 | 2800 |
| Example 3 | 4/3/1 | 3.8 | Within ± 15% | - | Performed | Dome-shaped GC | Silica | 0.50 | 200 | 2800 |
| Example 4 | 4/3/1 | 2.8 | Within ± 15% | - | Performed | Dome-shaped GC | Silica | 0.32 | 50 | 2800 |
| Example 5 | 4/4/0 | 22.1 | Within ± 15% | - | Performed | CIP material planar substrate | Graphite | 210.0 | 500 | 2800 |
| Example 6 | 4/4/0 | 22.1 | Within ± 15% | - | Performed | CIP material planar substrate | Graphite | 90.1 | 100 | 2800 |
| Example 7 | 4/4/0 | 22.1 | Within ± 15% | - | Performed | CIP material planar substrate | Spherical alumina | 54.0 | 20 | 2800 |
| Example 8 | 4/4/0 | 9.9 | Within ± 15% | - | Performed | Dome-shaped GC | Graphite powder | 294.6 | 100 | 2800 |

(continued)

| | Raw material polyimide film | | | Timing | | Pressing conditions | | | | Maximum temperature of graphitization (°C) |
|---|---|---|---|---|---|---|---|---|---|---|
| | Composition (PMDA/ODA/PDA) | Average thickness (μm) | variation of thickness among films | On carbonization | On graphitization | Press plate | Spacer particles | | Maximum applied pressure (gf/cm²) | |
| | | | | | | | Type (Oil used together) | Average particle size (d50) (μm) | | |
| Example 9 | 4/4/0 | 9.9 | Within ± 15% | - | Performed | Dome-shaped GC | Graphite powder | 210.0 | 20 | 2800 |
| Example 10 | 4/4/0 | 9.9 | Within ± 15% | Performed | Performed | CIP material planar substrate | Spherical alumina | 54.0 | 1.0 | 2600 |
| Example 11 | 4/4/0 | 9.9 | Within ± 15% | Performed | Performed | CIP material planar substrate | Spherical alumina | 8.5 | 5.0 | 2800 |
| Example 12 | 4/4/0 | 3.9 | Within ± 15% | - | Performed | Dome-shaped GC | Graphite | 294.6 | 100 | 2800 |
| Example 13 | 4/4/0 | 3.9 | Within ± 15% | - | Performed | Dome-shaped GC | Graphite | 160.9 | 20 | 2800 |
| Example 14 | 4/4/0 | 3.9 | Within ± 15% | Performed | Performed | CIP material planar substrate | Graphite | 68.2 | 4.0 | 2800 |
| Example 15 | 4/4/0 | 3.9 | Within ± 15% | Performed | Performed | CIP material planar substrate | Spherical alumina | 54.0 | 1.5 | 2800 |

(continued)

| | Raw material polyimide film | | | Pressing conditions | | | | | | Maximum temperature of graphitization (°C) |
| | Composition (PMDA/ ODA/ PDA) | Average thickness ($\mu$m) | variation of thickness among films | Timing | | Press plate | Spacer particles | | Maximum applied pressure (gf/ cm$^2$) | |
| | | | | On carbonization | On graphitization | | Type (Oil used together) | Average particle size (d50) ($\mu$m) | | |
|---|---|---|---|---|---|---|---|---|---|---|
| Example 16 | 4/4/0 | 3.9 | Within ± 15% | Performed | Performed | CIP material planar substrate | Graphite | 23.4 | 0.8 | 2800 |
| Example 17 | 4/4/0 | 3.9 | Within ± 15% | Performed | Performed | CIP material planar substrate | Spherical alumina | 8.5 | 0.4 | 2800 |
| Example 18 | 4/4/0 | 3.9 | Within ± 15% | Performed | Performed | CIP material planar substrate | Boron nitride | 10.5 | 2.0 | 2800 |
| Example 19 | 4/3/1 | 3.1 | Within ± 15% | - | Performed | Dome-shaped GC | Graphite | 160.9 | 10 | 2450 |
| Example 20 | 4/3/1 | 3.1 | Within ± 15% | - | Performed | Dome-shaped GC | Graphite | 11.0 | 20 | 2400 |
| Example 21 | 4/3/1 | 3.1 | Within ± 15% | - | Performed | Dome-shaped GC | Boron nitride | 10.5 | 50 | 2800 |
| Example 22 | 4/3/1 | 3.1 | Within ± 15% | Performed | Performed | CIP material planar substrate | Boron nitride | 7.4 | 2.0 | 2800 |

| | Raw material polyimide film | | | Pressing conditions | | | | | | Maximum temperature of graphitization (°C) |
| | Composition (PMDA/ ODA/ PDA) | Average thickness ($\mu$ m) | variation of thickness among films | Timing | | Press plate | Spacer particles | | Maximum applied pressure (gf/ cm$^2$) | |
| | | | | On carbonization | On graphitization | | Type (Oil used together) | Average particle size (d50) ($\mu$m) | | |
| Example 23 | 4/3/1 | 1.7 | Within ± 15% | Performed | Performed | CIP material planar substrate | Graphite | 294.6 | 4.0 | 2800 |
| Example 24 | 4/3/1 | 1.7 | Within ± 15% | Performed | Performed | CIP material planar substrate | Graphite | 160.9 | 2.0 | 2800 |
| Example 25 | 4/3/1 | 1.7 | Within ± 15% | Performed | Performed | CIP material planar substrate | Graphite | 11.0 | 2.0 | 2800 |
| Example 26 | 4/2/2 | 1.0 | Within ± 15% | Performed | Performed | CIP material planar substrate | Graphite | 294.6 | 1.0 | 2800 |
| Example 27 | 4/2/2 | 1.0 | Within ± 15% | Performed | Performed | CIP material planar substrate | Graphite (Canola oil) | 90.1 | 1.0 | 2500 |
| Example 28 | 4/2/2 | 1.0 | Within ± 15% | Performed | Performed | CIP material planar substrate | Spherical alumina (Sawing machine oil) | 8.5 | 0.6 | 2800 |

EP 3 409 644 A1

(continued)

| | Raw material polyimide film | | | Pressing conditions | | | | | | Maximum temperature of graphitization (°C) |
| | Composition (PMDA/ ODA/ PDA) | Average thickness ($\mu$ m) | variation of thickness among films | Timing | | Press plate | Spacer particles | | Maximum applied pressure (gf/ cm$^2$) | |
| | | | | On carbonization | On graphitization | | Type (Oil used together) | Average particle size (d50) ($\mu$m) | | |
| Example 29 | 4/2/2 | 0.8 | Within ± 15% | Performed | Performed | CIP material planar substrate | Graphite | 210.0 | 4.0 | 2800 |
| Example 30 | 4/2/2 | 0.8 | Within ± 15% | Performed | Performed | CIP material planar substrate | Silica | 4.8 | 4.0 | 2800 |
| Example 31 | 4/2/2 | 0.8 | Within ± 15% | Performed | Performed | CIP material planar substrate | Boron nitride | 2.2 | 4.0 | 2800 |

[Table 2]

| | Raw material polyimide film | | | Pressing conditions | | | | | | | Maximum temperature of graphitization (°C) |
| | Composition (PMDA/ ODA/ PDA) | Average thickness ($\mu$ m) | variation of thickness among films | Timing | | Press plate | Spacer particles | | Maximum applied pressure (gf/cm$^2$) | |
| | | | | On carbonization | On graphitization | | Type (Oil used together) | Average particle size (d50) ($\mu$ m) | | |
| Comparative Example 1 | 4/4/0 | 22.1 | Within ± 15% | - | Performed | Dome-shaped GC | Graphite | 210.0 | 5000 | 2800 |
| Comparative Example 2 | 4/4/0 | 22.1 | Within ± 15% | - | Performed | Dome-shaped GC | Spherical alumina | 15.9 | 10 | 2800 |
| Comparative Example 3 | 4/4/0 | 9.9 | Within ± 15% | Performed | Performed | CIP material planar substrate | Spherical alumina | 7.1 | 5.0 | 2800 |
| Comparative Example 4 | 4/4/0 | 9.9 | Within ± 15% | Performed | Performed | CIP material planar substrate | Silica | 4.8 | 5.0 | 2800 |
| Comparative Example 5 | 4/4/0 | 3.9 | Within ± 15% | Performed | Performed | CIP material planar substrate | Graphite | 2.0 | 2.0 | 2800 |
| Comparative Example 6 | 4/3/1 | 3.1 | Within ± 15% | Performed | Performed | CIP material planar substrate | Graphite | 2.0 | 1.0 | 2800 |
| Comparative Example 7 | 4/2/2 | 0.8 | Within ± 15% | Performed | Performed | CIP material planar substrate | Graphite | 294.6 | 4.0 | 2800 |

[Table 3]

| | Graphite film physical properties | | | | | | | | | | |
| --- | --- | --- | --- | --- | --- | --- | --- | --- | --- | --- | --- |
| | Thickness | | Density | | Electrical conductivity | | Arithmetic average roughness Ra | | | Ra/Thickness ($\mu$m/$\mu$m) | |
| | Average value ($\mu$m) | Variation among films | Average value (g/cm$^3$) | Variation among films | Average value (S/cm) | Variation among films | Average value ($\mu$m) | Variation in film | Variation among films | Average value | Variation among films |
| Example 1 | 9.5 | Within ± 15% | 1.9 | Within ± 5% | 15000 | Within ± 25% | 1.2 | Within ± 20% | Within ± 30% | 0.13 | Within ± 40% |
| Example 2 | 4.2 | Within ± 15% | 2.2 | Within ± 5% | 16000 | Within ± 25% | 0.30 | Within ± 20% | Within ± 30% | 0.071 | Within ± 40% |
| Example 3 | 1.3 | Within ± 15% | 2.2 | Within ± 5% | 17000 | Within ± 25% | 0.26 | Within ± 25% | Within ± 30% | 0.20 | Within ± 40% |
| Example 4 | 0.80 | Within ± 15% | 2.1 | Within ± 5% | 20000 | Within ± 25% | 0.21 | Within ± 25% | Within ± 30% | 0.26 | Within ± 40% |
| Example 5 | 9.3 | Within ± 15% | 2.0 | Within ± 5% | 17000 | Within ± 25% | 95 | Within ± 20% | Within ± 30% | 10 | Within ± 40% |
| Example 6 | 9.3 | Within ± 15% | 2.0 | Within ± 5% | 17000 | Within ± 25% | 46 | Within ± 20% | Within ± 30% | 4.9 | Within ± 40% |
| Example 7 | 9.2 | Within ± 15% | 2.0 | Within ± 5% | 18000 | Within ± 25% | 25 | Within ± 15% | Within ± 30% | 2.7 | Within ± 40% |
| Example 8 | 4.4 | Within ± 15% | 2.1 | Within ± 5% | 18000 | Within ± 25% | 133 | Within ± 25% | Within ± 30% | 30 | Within ± 40% |
| Example 9 | 4.3 | Within ± 15% | 2.1 | Within ± 5% | 18000 | Within ± 25% | 95 | Within ± 15% | Within ± 30% | 22 | Within ± 40% |
| Example 10 | 4.2 | Within ± 15% | 2.0 | Within ± 5% | 4000 | Within ± 25% | 24 | Within ± 20% | Within ± 30% | 5.7 | Within ± 40% |
| Example 11 | 4.2 | Within ± 15% | 2.1 | Within ± 5% | 19000 | Within ± 25% | 5.5 | Within ± 25% | Within ± 30% | 1.3 | Within ± 40% |
| Example 12 | 1.7 | Within ± 15% | 2.2 | Within ± 5% | 19000 | Within ± 25% | 140 | Within ± 25% | Within ± 30% | 82 | Within ± 40% |

| | Graphite film physical properties | | | | | | | | | | |
| | Thickness | | Density | | Electrical conductivity | | Arithmetic average roughness Ra | | | Ra/Thickness ($\mu$m/$\mu$m) | |
| | Average value ($\mu$m) | Variation among films | Average value (g/cm$^3$) | Variation among films | Average value (S/cm) | Variation among films | Average value ($\mu$m) | Variation in film | Variation among films | Average value | Variation among films |
|---|---|---|---|---|---|---|---|---|---|---|---|
| Example 13 | 1.6 | Within ± 15% | 2.2 | Within ± 5% | 19000 | Within ± 25% | 78 | Within ± 20% | Within ± 30% | 49 | Within ± 40% |
| Example 14 | 1.6 | Within ± 15% | 2.2 | Within ± 5% | 20000 | Within ± 25% | 33 | Within ± 20% | Within ± 30% | 21 | Within ± 40% |
| Example 15 | 1.6 | Within ± 15% | 2.2 | Within ± 5% | 21000 | Within ± 25% | 25 | Within ± 15% | Within ± 30% | 16 | Within ± 40% |
| Example 16 | 1.6 | Within ± 15% | 2.2 | Within ± 5% | 21000 | Within ± 25% | 11 | Within ± 15% | Within ± 30% | 6.9 | Within ± 40% |
| Example 17 | 1.5 | Within ± 15% | 2.2 | Within ± 5% | 21000 | Within ± 25% | 6.2 | Within ± 25% | Within ± 30% | 4.1 | Within ± 40% |
| Example 18 | 1.5 | Within ± 15% | 2.2 | Within ± 5% | 21000 | Within ± 25% | 2.5 | Within ± 25% | Within ± 30% | 1.7 | Within ± 40% |
| Example 19 | 0.98 | Within ± 15% | 1.9 | Within ± 5% | 900 | Within ± 25% | 79 | Within ± 20% | Within ± 30% | 81 | Within ± 40% |
| Example 20 | 0.90 | Within ± 15% | 1.8 | Within ± 5% | 400 | Within ± 25% | 5.0 | Within ± 15% | Within ± 30% | 5.6 | Within ± 40% |
| Example 21 | 0.90 | Within ± 15% | 2.2 | Within ± 5% | 22000 | Within ± 25% | 2.1 | Within ± 25% | Within ± 30% | 2.3 | Within ± 40% |
| Example 22 | 0.90 | Within ± 15% | 2.2 | Within ± 5% | 21000 | Within ± 25% | 1.3 | Within ± 25% | Within ± 30% | 1.4 | Within ± 40% |
| Example 23 | 0.40 | Within ± 15% | 2.2 | Within ± 5% | 21000 | Within ± 25% | 125 | Within ± 25% | Within ± 30% | 313 | Within ± 40% |
| Example 24 | 0.40 | Within ± 15% | 2.2 | Within ± 5% | 21000 | Within ± 25% | 72 | Within ± 25% | Within ± 30% | 180 | Within ± 40% |

(continued)

| | Graphite film physical properties | | | | | | | | | | |
| --- | --- | --- | --- | --- | --- | --- | --- | --- | --- | --- | --- |
| | Thickness | | Density | | Electrical conductivity | | Arithmetic average roughness Ra | | | Ra/Thickness ($\mu$m/$\mu$m) | |
| | Average value ($\mu$m) | Variation among films | Average value (g/cm$^3$) | Variation among films | Average value (S/cm) | Variation among films | Average value ($\mu$m) | Variation in film | Variation among films | Average value | Variation among films |
| Example 25 | 0.40 | Within ± 15% | 2.2 | Within ± 5% | 21000 | Within ± 25% | 6.4 | Within ± 20% | Within ± 30% | 16 | Within ± 40% |
| Example 26 | 0.31 | Within ± 15% | 2.1 | Within ± 5% | 21000 | Within ± 25% | 140 | Within ± 25% | Within ± 30% | 452 | Within ± 40% |
| Example 27 | 0.31 | Within ± 15% | 1.9 | Within ± 5% | 2000 | Within ± 25% | 50 | Within ± 25% | Within ± 30% | 161 | Within ± 40% |
| Example 28 | 0.31 | Within ± 15% | 2.2 | Within ± 5% | 20000 | Within ± 25% | 5.5 | Within ± 20% | Within ± 30% | 18 | Within ± 40% |
| Example 29 | 0.20 | Within ± 15% | 2.2 | Within ± 5% | 21000 | Within ± 25% | 99 | Within ± 25% | Within ± 30% | 495 | Within ± 40% |
| Example 30 | 0.20 | Within ± 15% | 2.2 | Within ± 5% | 22000 | Within ± 25% | 2.5 | Within ± 25% | Within ± 30% | 13 | Within ± 40% |
| Example 31 | 0.20 | Within ± 15% | 2.2 | Within ± 5% | 20000 | Within ± 25% | 0.51 | Within ± 25% | Within ± 30% | 2.6 | Within ± 40% |

[Table 4]

| | Graphite film physical properties | | | | | | | | | | |
| --- | --- | --- | --- | --- | --- | --- | --- | --- | --- | --- | --- |
| | Thickness | | Density | | Electrical conductivity | | Arithmetic average roughness Ra | | | Ra/Thickness ($\mu$m/$\mu$m) | |
| | Average value ($\mu$m) | Variation among films | Average value (g/cm$^3$) | Variation among films | Average value (S/cm) | Variation among films | Average value ($\mu$m) | Variation in film | Variation among films | Average value | Variation among films |
| Comparative Example 1 | × | × | × | × | × | × | × | × | × | × | × |
| Comparative Example 2 | 9.3 | Within ± 15% | 1.9 | Within ± 5% | 18000 | Within ± 25% | 7.7 | Within ± 25% | Within ± 30% | 0.83 | Within ± 40% |
| Comparative Example 3 | 4.3 | Within ± 15% | 2.1 | Within ± 5% | 18000 | Within ± 25% | 3.5 | Within ± 25% | Within ± 30% | 0.81 | Within ± 40% |
| Comparative Example 4 | 4.2 | Within ± 15% | 2.1 | Within ± 5% | 18000 | Within ± 25% | 2.2 | Within ± 25% | Within ± 30% | 0.52 | Within ± 40% |
| Comparative Example 5 | 1.6 | Within ± 15% | 2.2 | Within ± 5% | 21000 | Within ± 25% | 0.61 | Within ± 25% | Within ± 30% | 0.38 | Within ± 40% |
| Comparative Example 6 | 0.90 | Within ± 15% | 2.1 | Within ± 5% | 22000 | Within ± 25% | 0.65 | Within ± 25% | Within ± 30% | 0.72 | Within ± 40% |
| Comparative Example 7 | 0.20 | Within ± 15% | 2.2 | Within ± 5% | 21000 | Within ± 25% | 132 | Within ± 25% | Within ± 30% | 660 | Within ± 40% |

[Table 5]

| | Thermal cycle durability test (Number of times of heating up to breakage) | | | | | | | | | | | | | | Laser cut test (Number of broken pieces/100) | |
| | Electrical heating (Argon gas) | | | | Electrical heating (In vacuum) | | | | | | | Infrared heating (In vacuum) | | | | |
| | 2700 °C | 2500 °C | 2300 °C | 2100 °C | 2100 °C | 1900 °C | 1700 °C | 1500 °C | 1300 °C | 1100 °C | 900 °C | 1700 °C | 1400 °C | 1100 °C | Cut length 5 cm | Cut length 10 cm |
|---|---|---|---|---|---|---|---|---|---|---|---|---|---|---|---|---|
| Example 1 | >100 | | | >200 | >100 | | | >200 | | | >300 | >100 | | >200 | 0 | 0 |
| Example 2 | >100 | | | >200 | >100 | | | >200 | | | >300 | >100 | | >200 | 0 | 0 |
| Example 3 | 96 | >100 | | >200 | >100 | | | >200 | | | >300 | >100 | | >200 | 0 | 0 |
| Example 4 | 90 | >100 | | >200 | 96 | >100 | | >200 | | | >300 | >100 | | >200 | 0 | 1 |
| Example 5 | >100 | | | >200 | >100 | | | >200 | | | >300 | >100 | | >200 | 0 | 0 |
| Example 6 | >100 | | | >200 | >100 | | | >200 | | | >300 | >100 | | >200 | 0 | 0 |
| Example 7 | >100 | | | >200 | >100 | | | >200 | | | >300 | >100 | | >200 | 0 | 0 |
| Example 8 | >100 | | | >200 | >100 | | | >200 | | | >300 | >100 | | >200 | 0 | 0 |
| Example 9 | >100 | | | >200 | >100 | | | >200 | | | >300 | >100 | | >200 | 0 | 0 |
| Example 10 | >100 | | | >200 | >100 | | | >200 | | | >300 | >100 | | >200 | 0 | 0 |
| Example 11 | 90 | >100 | | >200 | 84 | >100 | | >200 | | | >300 | >100 | | >200 | 0 | 2 |
| Example 12 | >100 | | | >200 | >100 | | | >200 | | | >300 | >100 | | >200 | 0 | 0 |
| Example 13 | >100 | | | >200 | >100 | | | >200 | | | >300 | >100 | | >200 | 0 | 0 |
| Example 14 | >100 | | | >200 | >100 | | | >200 | | | >300 | >100 | | >200 | 0 | 0 |
| Example 15 | >100 | | | >200 | >100 | | | >200 | | | >300 | >100 | | >200 | 0 | 0 |
| Example 16 | >100 | | | >200 | >100 | | | >200 | | | >300 | >100 | | >200 | 0 | 0 |
| Example 17 | >100 | | | >200 | >100 | | | >200 | | | >300 | >100 | | >200 | 0 | 1 |
| Example 18 | 92 | >100 | | >200 | 87 | >100 | | >200 | | | >300 | >100 | | >200 | 0 | 2 |
| Example 19 | >100 | | | >200 | >100 | | | >200 | | | >300 | >100 | | >200 | 0 | 0 |
| Example 20 | >100 | | | >200 | 97 | >100 | | >200 | | | >300 | >100 | | >200 | 0 | 1 |
| Example 21 | >100 | | | >200 | 95 | >100 | | >200 | | | >300 | >100 | | >200 | 0 | 2 |

(continued)

| | Thermal cycle durability test (Number of times of heating up to breakage) | | | | | | | | | | | | | | Laser cut test (Number of broken pieces/100) | |
| | Electrical heating (Argon gas) | | | | Electrical heating (In vacuum) | | | | | | | Infrared heating (In vacuum) | | | | |
| | 2700 °C | 2500 °C | 2300 °C | 2100 °C | 2100 °C | 1900 °C | 1700 °C | 1500 °C | 1300 °C | 1100 °C | 900 °C | 1700 °C | 1400 °C | 1100 °C | Cut length 5 cm | Cut length 10 cm |
|---|---|---|---|---|---|---|---|---|---|---|---|---|---|---|---|---|
| Example 22 | 81 | >100 | | >200 | 89 | >100 | | >200 | | | >300 | >100 | | >200 | 1 | 4 |
| Example 23 | 93 | >100 | | >200 | 90 | >100 | | >200 | | | >300 | >100 | | >200 | 0 | 2 |
| Example 24 | >100 | | | >200 | 94 | >100 | | >200 | | | >300 | >100 | | >200 | 0 | 3 |
| Example 25 | >100 | | | >200 | >100 | | | >200 | | | >300 | >100 | | >200 | 0 | 0 |
| Example 26 | 88 | >100 | | >200 | 82 | >100 | | >200 | | | >300 | >100 | | >200 | 1 | 3 |
| Example 27 | 99 | >100 | | >200 | 89 | >100 | | >200 | | | >300 | >100 | | >200 | 0 | 2 |
| Example 28 | >100 | | | >200 | >100 | | | >200 | | | >300 | >100 | | >200 | 0 | 0 |
| Example 29 | 78 | >100 | | >200 | 84 | >100 | | >200 | | | >300 | >100 | | >200 | 2 | 5 |
| Example 30 | 98 | >100 | | >200 | 98 | >100 | | >200 | | | >300 | >100 | | >200 | 0 | 1 |
| Example 31 | 75 | >100 | | >200 | 77 | >100 | | >200 | | | >300 | >100 | | >200 | 2 | 6 |
| Comparative Example 1 | × | × | × | × | × | × | × | × | × | × | × | × | × | × | × | × |
| Comparative Example 2 | 28 | 36 | 46 | 60 | 15 | 31 | 41 | 52 | 62 | 74 | 85 | 45 | 65 | 77 | 8 | 16 |
| Comparative Example 3 | 22 | 31 | 43 | 55 | 11 | 25 | 33 | 46 | 56 | 70 | 79 | 35 | 53 | 68 | 10 | 15 |
| Comparative Example 4 | 20 | 30 | 42 | 50 | 10 | 22 | 34 | 43 | 57 | 68 | 77 | 36 | 56 | 66 | 10 | 18 |
| Comparative Example 5 | 18 | 27 | 38 | 40 | 8 | 22 | 30 | 40 | 51 | 63 | 74 | 31 | 48 | 57 | 14 | 19 |
| Comparative Example 6 | 13 | 24 | 34 | 37 | 6 | 15 | 25 | 38 | 49 | 62 | 71 | 28 | 42 | 52 | 15 | 20 |

| | Thermal cycle durability test (Number of times of heating up to breakage) | | | | | | | | | | | | | | Laser cut test (Number of broken pieces/100) | |
| | Electrical heating (Argon gas) | | | | Electrical heating (In vacuum) | | | | | | | Infrared heating (In vacuum) | | | | |
| | 2700 °C | 2500 °C | 2300 °C | 2100 °C | 2100 °C | 1900 °C | 1700 °C | 1500 °C | 1300 °C | 1100 °C | 900 °C | 1700 °C | 1400 °C | 1100 °C | Cut length 5 cm | Cut length 10 cm |
| Comparative Example 7 | 4 | 6 | 14 | 21 | 2 | 14 | 20 | 29 | 35 | 40 | 45 | 19 | 36 | 46 | 22 | 32 |

Since the Ra/thickness ratio of the graphite film of the example is within an appropriate range, it is excellent in thermal cycle durability and also excellent in durability in the laser cutting test. On the other hand, since the Ra/thickness ratio of the graphite film of the comparative example is in an inappropriate range, it is inferior in thermal cycle durability and also inferior in durability in the laser cutting test. In Comparative Example 1, the pressure of the press was too strong to cause many breakages in the graphite film, so that various measurements were not carried out.

INDUSTRIAL APPLICABILITY

The graphite film or the graphite tape of the present invention is extremely useful as a light emitter of a light emitting device; a filament; a high heat resistant wire of high current capacity; an electric resistance type heating element; a protective film and a reflecting member, a support substrate, an absorbing member, a transmitting member, a diffractive member, a sensor, a thermal diffusion member, a subject, a workpiece or the like, in an apparatus, an analyzing method or a processing method in which a strong infrared ray, an ultraviolet ray, an X ray, a laser beam, an ion beam, a proton beam, a negative hydrogen ion beam, a neutron beam, an electron beam or the like is radiated.

DESCRIPTION OF REFERENCE SIGNS

| | |
|---|---|
| 1a, 1b, 1c, 1d, 4a, 5a, 11a, 12a, 13a, 14a, 15a | Graphite film |
| 6a, 7a, 8a | Film to be treated (polymer film, carbonized film, graphite film) |
| 6b, 6c, 7b, 8b | Press plate |

**Claims**

1. A graphite film having an area of $1 \times 1$ cm$^2$ or more, a thickness of 10 nm to 10 $\mu$m, an electrical conductivity in a film surface direction of 400 S/cm or more, and a ratio of an arithmetic average roughness Ra of a surface to the thickness of 1.0 to 600 or 0.3 or less.

2. The graphite film according to claim 1, wherein a value at each position obtained by measurements of an arithmetic average roughness Ra at a plurality of positions is within $\pm$ 25% of an average value of Ra obtained from measurement results at all the plurality of positions.

3. The graphite film according to claim 1 or 2, having a density of 1.5 g/cm$^3$ or more.

4. The graphite film according to any one of claims 1 to 3, wherein a layer structure having layers laminated in parallel to a film surface and having no void is observed in an area of 70% or more of a cross-sectional area of the graphite film in a cross-sectional SEM image in a direction perpendicular to the film surface, the cross-sectional SEM image having both front and back surfaces of the film within a field of view.

5. A process for producing the graphite film as defined in any one of claims 1 to 4, comprising:

   a step of carbonizing and graphitizing a polymer film to obtain a graphite film; and
   a re-graphitization step of treating the obtained graphite film again at a graphitization temperature, as necessary, wherein,
   during at least one treatment of the carbonization, graphitization and re-graphitization, a spacer having a thickness of 0.4 or less or 0.75 to 350 when a thickness of a polymer film, a carbonized film or a graphite film is defined as 1 is disposed between a surface of the polymer film, the carbonized film or the graphite film to be treated and a press plate at both surfaces, and
   the polymer film, the carbonized film, or the graphite film is treated at a carbonization temperature, a graphitization temperature or a re-graphitization temperature while the polymer film, the carbonized film or the graphite film is pressed from both sides at a pressure of 0.3 gf/cm$^2$ or more and 2500 gf/cm$^2$ or less using the press plates.

6. A graphite tape having a parallel portion with a width of 40 mm or less and a length of not less than 5 times the width, wherein a material of the graphite tape is same as the material of the graphite film as defined in any one of claims 1 to 4.

7. A process for producing a graphite tape, comprising cutting the graphite film as defined in any one of claims 1 to 4 with a laser beam to cut out a parallel portion with a width of 40 mm or less and a length of not less than 5 times the width.

8. A method for using the graphite film as defined in any one of claims 1 to 4 or the graphite tape as defined in claim 6, the method comprising disposing the graphite film or the graphite tape in a thermal environment where a maximum temperature partially reaches 900°C or higher.

9. The use method according to claim 8, wherein when a part of the graphite film or the graphite tape reaches a maximum temperature of 900°C or higher, a difference in temperature with a portion showing a minimum temperature of the graphite film or the graphite tape is 300°C or higher.

10. The use method according to claim 8 or 9, wherein a plurality of the graphite tapes are arranged in parallel.

11. The use method according to any one of claims 8 to 10, wherein a part of the graphite film or the graphite tape is fixed to a support member and a rest of the graphite film or the graphite tape floats in space, and a portion floating in space reaches a maximum temperature.

12. The use method according to any one of claims 8 to 11, wherein an atmosphere at a time of reaching the maximum temperature is an inert gas having a pressure of 0.1 MPa or more or a vacuum having a pressure of 1000 Pa or less.

13. The use method according to any one of claims 8 to 12, wherein the graphite film or the graphite tape is heated to the maximum temperature by any one of energization, infrared irradiation, laser beam irradiation, and ion beam irradiation.

[Fig. 1]

[Fig. 2]

20.0kV 8.2mm x60 SE(M)     500um

[Fig. 3]

25.0kV 7.2mm x2.00k SE(U)     20.0um

[Fig. 4]

4a

×3,000,000    5nm

[Fig. 5]

[Fig. 6]

[Fig. 7]

[Fig. 8]

[Fig. 9]

[Fig. 10]

[Fig. 11]

[Fig. 12]

[Fig. 13]

13b

60mm

10mm

3mm

13a

[Fig. 14]

14b

60mm

10mm

10mm

14a

[Fig. 15]

## INTERNATIONAL SEARCH REPORT

| International application No. |
| --- |
| PCT/JP2017/003054 |

| A. CLASSIFICATION OF SUBJECT MATTER |
| --- |
| *C01B32/205*(2017.01)i |

According to International Patent Classification (IPC) or to both national classification and IPC

| B. FIELDS SEARCHED |
| --- |

Minimum documentation searched (classification system followed by classification symbols)
C01B32/205

Documentation searched other than minimum documentation to the extent that such documents are included in the fields searched

| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JST7580/JSTChina(JDreamIII)

| C. DOCUMENTS CONSIDERED TO BE RELEVANT |
| --- |

| Category* | Citation of document, with indication, where appropriate, of the relevant passages | Relevant to claim No. |
| --- | --- | --- |
| P,X<br>P,A | WO 2016/129442 A1 (Kaneka Corp.),<br>18 August 2016 (18.08.2016),<br>claims 1 to 4, 14, 16, 18, 25; paragraphs<br>[0018], [0036]; fig. 18, 19<br>(Family: none) | 1,3,4<br>2,5-13 |
| A | JP 2010-1191 A (Kaneka Corp.),<br>07 January 2010 (07.01.2010),<br>paragraph [0018]<br>(Family: none) | 1-13 |
| A | JP 2010-64949 A (Kaneka Corp.),<br>25 March 2010 (25.03.2010),<br>claims 1, 3, 4<br>& JP 2013-126950 A     & WO 2009/060818 A1 | 1-13 |

| ☒ Further documents are listed in the continuation of Box C. | ☐ See patent family annex. |
| --- | --- |

| * | Special categories of cited documents: |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>12 April 2017 (12.04.17) | Date of mailing of the international search report<br>25 April 2017 (25.04.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/003054

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-216552 A (National Institute of Advanced Industrial Science and Technology), 24 October 2013 (24.10.2013), claims 1 to 4 (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004299919 A
- JP 2005053719 A
- JP 2013212938 A
- JP 2016015082 A

**Non-patent literature cited in the description**

- **L. SPAIN ; A. R. UBBELOHDE ; D. A. YOUNG.** Electronic properties of oriented graphite. *PHILOSOPHICAL TRANSACTIONS OF THE ROY ALSOCIETY*
- **T. C. CHIEU ; M. S. DRESSELHAUS ; M. ENDO.** *Phys. Rev.,* 1982, vol. B26, 5867